# EUROPÄISCHE PATENTSCHRIFT

(11) **EP 1 437 958 B1**
(45) Veröffentlichungstag und Bekanntmachung des Hinweises auf die Patenterteilung: **16.11.2005**
(21) Anmeldenummer: 02777093.2
(22) Anmeldetag: 13.09.2002
(51) Int. Cl.: A47L 9/00, A47L 5/28

(54) **SELBSTTÄTIG VERFAHRBARES BODENSTAUB-AUFSAMMELGERÄT, SOWIE KOMBINATION EINES DERARTIGEN AUFSAMMELGERÄTES UND EINER BASISSTATON**
AUTOMATICALLY DISPLACEABLE FLOOR-TYPE DUST COLLECTOR AND COMBINATION OF SAID COLLECTOR AND A BASE STATION
APPAREIL COLLECTEUR DE POUSSIERE SUR LES SOLS, DEPLA ABLE AUTOMATIQUEMENT, ET COMBINAISON D'UN TEL APPAREIL ET D'UN POSTE DE BASE

(30) Priorität: 14.09.2001 DE 10145316; 06.09.2002 DE 10242257
(43) Veröffentlichungstag der Anmeldung: 21.07.2004
(73) Patentinhaber: Vorwerk & Co. Interholding GmbH, 42275 Wuppertal (DE)
(72) Erfinder: KÖCHEL, Matthias, 45549 Sprockhövel (DE); SOMMER, Jörg, 50737 Köln (DE); SCHLISCHKA, Patrick, 42369 Wuppertal (DE); MICHEL, Paul-Gerhard, 58256 Ennepetal (DE); FISCHER, Olaf, 76131 Karlsruhe (DE)
(74) Vertreter: Müller, Enno
(86) Internationale Anmeldenummer: PCT/EP2002/010302
(87) Internationale Veröffentlichungsnummer: WO 2003/024292

(56) Entgegenhaltungen:
- DE-A- 4 414 683
- DE-A- 4 414 871
- GB-A- 2 344 747
- US-A- 5 440 216
- PATENT ABSTRACTS OF JAPAN vol. 017, no. 348 (P-1566), 30. Juni 1993 (1993-06-30) & JP 05 046239 A (NEC HOME ELECTRON LTD), 26. Februar 1993 (1993-02-26)
- PATENT ABSTRACTS OF JAPAN vol. 1996, no. 08, 30. August 1996 (1996-08-30) & JP 08 089455 A (NIPPON YUSOKI CO LTD), 9. April 1996 (1996-04-09)
- PATENT ABSTRACTS OF JAPAN vol. 017, no. 647 (C-1135), 2. Dezember 1993 (1993-12-02) & JP 05 207955 A (SANYO ELECTRIC CO LTD), 20. August 1993 (1993-08-20)
- PATENT ABSTRACTS OF JAPAN vol. 2000, no. 10, 17. November 2000 (2000-11-17) & JP 2000 202792 A (SHARP CORP), 25. Juli 2000 (2000-07-25)

## Beschreibung

Die Erfindung betrifft zunächst ein selbsttätig verfahrbares Bodenstaub-Aufsammelgerät mit einem elektromotorischen Antrieb, einem Staubsammelbehälterund einer Abdeckhaube, wobei das Gerät einen von einer Kreisform abweichenden Grundriss aufweist.

Geräte der in Rede stehenden Art sind als autonome Saugroboter bekannt und finden insbesondere Anwendung im Haushaltsbereich. Demzufolge sind geringe Antriebsleistungen nötig, so dass in einfachster Weise Speichermedien, wie bspw. Akkumulator-Pakete zur Speisung des elektromotorischen Antriebes ausreichen. Hierzu weisen die bekannten Geräte zumeist zwei unabhängig voneinander antreibbare Räder auf. Der durch das Gerät aufgenommene, bspw. aufgesaugte Staub wird in einem geräteseifigen Staubsammelbehälter aufgefangen. Weiter istbekannt, die Geräteteile, wie bspw. den Staubsammelbehälter und die Antriebe mittels einer Abdeckhaube zu überfangen, um diese vor von außen angreifenden Kräften, insbesondere Stößen zu schützen. GB-A-2 344 747 zeigt ein solches Gerät.

Im Hinblick auf den zuvor beschriebenen Stand der Technik wird eine technische Problematik der Erfindung darin gesehen, ein Bodenstaub-Aufsammelgerät der in Rede stehenden Art insbesondere hinsichtlich des zu erzielenden Reinigungsergebnisses zu verbessern.

Diese Problematik ist zunächst und im Wesentlichen dadurch gelöst, dass der Grundriss sich aus einem Kreisformabschnitt und einem, an einem Rechteck orientierten Formabschnitt zusammensetzt, wobei der Rechteckabschnitt in Verfahrrichtung vorne ist. Zufolge dieser Ausgestaltung kann der Reinigungsbereich - der Bereich, in welchem der zu reinigende Boden gekehrt oder abgesaugt wird - bei gegenüber einem kreisförmigen Grundriss mit gleichem Radius wie der Kreisformabschnitt der erfindungsgemäßen Grundrissausgestaltung vergrößert werden, was zu einem verbesserten Reinigungsergebnis führt. Des Weiteren kann zufolge dieser erfindungsgemäßen Grundrissausgestaltung der Reinigungsbereich nahe der in Verfahrrichtung vorderen Randkante angeordnet werden, so dass eine Reinigung bis in Raumecken erreicht werden kann. Es wird bevorzugt, dass der an einem Rechteck orientierte Formabschnitt verrundet oder zumindest in den Eckbereichen abgerundet ist, womit eine Verbesserung der Beweglichkeit des autonom arbeitenden Gerätes erreicht wird. In einer bevorzugten Ausgestaltung des Erfindungsgegenstandes ist vorgesehen, dass das Gerät eine um eine Horizontalachse drehbare Bürste aufweist und dass die Bürste in dem Rechteckabschnitt des Grundrisses angeordnet ist. Diese Bürste ist über einen gesonderten Elektromotor antreibbar. Denkbar ist hierbei, die Bürste zur Ausbildung eines reinen Kehrgerätes zu nutzen. Darüber hinaus besteht jedoch auch die Möglichkeit diese elektromotorisch angetriebene Bürste in einem Sauggerät zu integrieren, dies bei Anordnung der Bürste im Bereich des Saugmundes. Um eine verbesserte Rand- und Eckreinigung zu erzielen, wird weiter vorgeschlagen, dass das Gerät weiter zwei, orientiert an einer vertikalen Achse umlaufende Kehrbürsten aufweist. Diese sind zunächst so positioniert, dass deren Bürstenkörper innerhalb des Gerätegrundrisses liegen, die Borsten bzw. Borstenabschnitte hingegen über den Grundriss hinausragen. Hierbei kommen bevorzugt weiche Borsten zum Einsatz, welche sich der Wand bzw. Randkontur anpassen und nicht störend auf das Fahrverhalten bzw. Reaktionsverhalten des Gerätes einwirken. Weiter wird bevorzugt, dass die Kehrbürsten vorderen Eckbereichen des Rechteckabschnittes des Grundrisses zugeordnet angeordnet sind und hierbei drehrichtungsmäßig so eingestellt sind, dass die Borsten den Schmutz vom Rand bzw. aus der Ecke in die Mitte - das heißt mit Bezug auf die vordere Randkante des Gerätes von außen nach innen - in Richtung auf die um eine Horizontalachse drehende Bürste transportieren. Letztere befördert hiernach den Staub bzw. Schmutz in den Sammelbehälter. Durch Neigung der Drehachse einer Kehrbürste in Verfahrrichtung wird das Kehrergebnis weiter verbessert.

Weiter betrifft die Erfindung ein Bodenstaub-Aufsammelgerät, vorzugsweise selbsttätig verfahrbares Bodenstaub-Aufsammelgerät mit einem elektromotorischen Antrieb, einem Staubsammelbehälter und einer Abdeckhaube, sowie einer Bürste, die aufgrund ihrer Drehung die Staubteile in einer bestimmten Wurfrichtung in das Staubsammelbehältnis befördert, wobei zugeordnet zu der Bürste eine an die Wurfrichtung orientiert angeordnete Rampe vorgesehen ist. Um ein Bodenstaub-Aufsammelgerät der in Rede stehenden Art verbessert auszugestalten, wird vorgeschlagen, dass die Rampe in Wurfrichtung ausweichbar angeordnet ist. Zufolge dieser erfindungsgemäßen Ausgestaltung liegt die einer Kehrschaufel gleichende Rampe auf allen bekannten Böden mit verschiedenen Höhen bzw. unterschiedlichen Beschaffenheiten auf. Gleichzeitig ist durch die erfindungsgemäße Ausgestaltung erreicht, dass die Rampe sich nicht an Hindernissen verhakt. Durch die ausweichbare Anordnung ist der ständige Kontakt zum Boden gewährleistet, wobei weiter ein konfliktloses Überwinden von Hindernissen ermöglicht ist. Eine derartige Anordnung der Rampe ist sowohl bei selbsttätig verfahrbaren Bodenstaub-Aufsammelgeräten als auch bei Bodenstaub-Aufsammelgeräten wie Kehrgeräte, die handgeführt sind, wobei weiter die Bürste mittels Reibung oder mittels Elektromotoren angetrieben wird, denkbar. So ist diese erfindungsgemäße ausweichbare Anordnung der Rampe bei einem Reinigungsgerät gemäß der DE 4414 683 A1 denkbar.

Die Erfindung betrifft des Weiteren ein selbsttätig verfahrbares Bodenstaub-Aufsammelgerät mit einem elektromotorischen Antrieb, einem Staubsammelbehälter und einer Abdeckhaube. Um ein Aufsammelgerät der in Rede stehenden Art derart in vorteilhafter Weise weiterzubilden, dass eine verbesserte Reinigung in Rand- und Eckbereichen erzielt wird, wird vorgeschlagen, dass das Gerät als Kehreinheit ausgebildet ist mit einer um eine Horizontalachse drehbaren Bürste, die von zwei, orientiert an einer Vertikalachse drehenden Kehrbürsten beliefert wird. Bei den bekannten Geräten besteht grundsätzlich ein Konflikt zwischen der Beweglichkeit des autonom arbeitenden Gerätes und der Fähigkeit in Ecken und an Kanten zu reinigen. Die erfindungsgemäße Lösung besteht aus einer Anordnung von drei Bürsten, wobei zwei an einer Vertikalachse orientiert drehbare Kehrbüsten den Schmutz aus Rand- und Eckbereichen in Richtung auf die um eine Horizontalachse drehbare Bürste transportieren.

Auch betrifft die Erfindung ein Bodenstaub-Aufsammelgerät, wobei die Abdeckhaube an den weiteren Geräteteilen mittels dezentral angeordneter Federn abgestützt ist. Diese Haubenabfederung dient zum Einen zum Abfangen von, von außen eingeleiteten Kräften, bspw. Stößen. Des Weiteren bieten diese Federn die Möglichkeit eines Absenkens der Haube bei etwa vertikaler Beaufschlagung. So kann bspw. die Abdeckhaube vollständig gegen die Federkraft bis zum Fußboden absinken und somit äußere Belastungen vollständig auffangen. Die Geräte-Innenteile bleiben unversehrt. Um eine verbesserte Halterung der Abdeckhaube an dem Gerätechassis zu erreichen, wird vorgeschlagen, dass drei Federn vorgehen sind, welche weiter bevorzugt und bezogen auf den Grundriss des Geräte-Umfangs gleich verteilt sind. Denkbar ist auch die Anordnung von vier Federn. Zufolge dieser Ausgestaltung ist auch eine horizontale Verschiebung der Abdeckhaube bei Stößen nach Hinderniskontakt erlaubt, wobei ein Sensor oder Schalter ausgelöst wird, der die Stoßrichtung anzeigt Als besonders vorteilhaft erweist sich zudem, dass durch die erfindungsgemäße Anordnung der Federn eine Horizontalverschiebung der Abdeckhaube unabhängig von der Einwirkhöhe der die Abdeckhaube beaufschlagenden Kraft ermöglicht ist. Bezüglich der Sensoren können hierbei Bandschalter, Mikroschalter, Reed-Kontakt oder auch Hall-Sensoren Anwendung finden. Es ist hier durch eine fehlerfreie Hinderniserkennung erreicht. Die ermittelte Stoßrichtung wird ausgewertet, wonach das autonome Gerät in seiner Verfahrrichtung korrigiert wird. Zufolge der erfindungsgemäßen Ausgestaltung können Hindernisse mit hoher Empfindlichkeit erkannt werden.

Um ein Aufsammelgerät der in Rede stehenden Art insbesondere hinsichtlich der Staubaufnahme verbessert auszugestalten, wird eine, um eine Horizontalachse laufende Bürste vorgeschlagen, die den aufgesammelten Staub in einen gerätefesten Staubsammelbehälter wirft. Zufolge dieser Ausgestaltung ist das Aufsammelgerät zunächst als Kehrgerät ausgebildet. Denkbar ist jedoch auch die weitere Anordnung eines, die Reinigung unterstützenden Sauggebläses. Die Bürste ist über einen Elektromotor antreibbar und ragt mit ihren Borstenendabschnitten über die Bodenunterseite des Gerätes nach unten hinaus, wodurch eine kehrende Wirkung auf den zu pflegenden Boden erreicht wird.

Weiter betrifft die Erfindung ein Bodenstaub-Aufsammelgerät, wobei hier zur Erzielung eines verbesserten Reinigungsergebnisses vorgeschlagen wird, dass in einem Staubzuführkanal zu dem Staubsammelbehälter eine Staubdurchsatzkontrolle vorgesehen ist. Zufolge dieser Ausgestaltung wird die durch die Bürste vom Boden aufgenommene und durch direkte Kraft-/ Impulseinwirkung beschleunigte Schmutzmenge erfasst. Der ermittelte Wert kann bspw. zur Änderung der Verhaltensstrategie des selbsttätig verfahrbaren Aufsammelgeräts führen.

Die Erfindung betrifft zudem ein Bodenstaub-Aufsammelgerät, wobei eine Abgrundund/ oder Hinderniserkennung vorgesehen ist. Um hier ein verbessertes Bodenstaub-Aufsammelgerät der in Rede stehenden Art anzugeben, wird vorgeschlagen, dass zur Abgrund- und/ oder Hinderniserkennung eine Infrarot-Lichtschranke dient.

Auch betrifft die Erfindung ein Bodenstaub-Aufsammelgerät, mit einem, das Bodenstaub-Aufsammelgerät zusammen mit der Abdeckhaube vom Boden distanzierenden Fahrwerk, wobei die Abdeckhaube bei Erreichen einer vorgegebenen Belastung auf dem Boden aufsitzt. Um ein Bodenstaub-Aufsammelgerät der in Rede stehenden Art dahingehend verbessert auszugestalten, dass bei vergleichsweise geringer Bauhöhe weiterhin die Abdeckhaube bei Erreichen einer vorgegebenen Belastung auf dem Boden aufsetzen kann, wird vorgeschlagen, dass das Fahrwerk relativ zu der Abdeckhaube federnd aufgehängt ist derart, dass die Feder im Sinne einer Verringerung des Abstandes der Abdeckhaube zu dem Boden bei Überschreiten eines Schwellwertes anspricht Die Abdeckhaube ist hierbei bevorzugt gegenüber dem Chassis des Aufsammelgeräts in Vertikalrichtung nicht oder nur um einen gegenüber der Bodenfreiheit geringeren Betrag verlagerbar. Das Absenken der Abdeckhaube auf den Boden erfolgt durch Einwärtsverlagerung des Fahrwerks in das Chassis bei Überschreiten eines Feder-Schwellwertes.

Die vorgenannten erfindungsgemäßen Lösungen sind sowohl für sich als Einzellösungen wesentlich, jedoch darüber hinaus auch miteinander kombinierbar. Auch die nachstehend aufgeführten weiteren erfindungsgemäßen Vorschläge zur Verbesserung eines Bodenstaub-Aufsammelgeräts sind jeweils für sich wesentlich als auch untereinander kombinierbar und darüber hinaus mit jedem einzelnen oder mehreren der vorgenannten Erfindungen kombinierbar.

So wird weiter vorgeschlagen, dass bei Erreichen des Schwellwertes die Abdeckhaube zufolge eines sofortigen Nachgebens der Feder zur Auflage auf den Boden kommt. Diesbezüglich kann eine Feder mit einer entsprechenden Federcharakteristik zum Einsatz kommen, welche Federcharakteristik so ausgelegt ist, dass bei Überschreiten des vorbestimmten Schwellwertes schlagartig das Fahrwerk einfährt zufolge dessen die Abdeckhaube auf dem Boden zur Auflage kommt. Alternativ kann die Feder auch eine Blattfeder sein, welche aus einem profilierten - bombierten - Metall- bzw. Stahlblech geschnitten ist und im Querschnitt eines sphärische Auswölbung aufweist, womit eine Knackfeder gebildet ist, welche bei Grenzbelastung, d. h. bei Überschreiten eines Schwellwertes schlagartig anspricht. Zufolge der durch die sphärische Wölbung vorgegebene Federcharakteristik ist eine Überfallwirkung erzielt. Um bei einem möglichst großen Belastungszustandsbereich des Aufsammelgeräts den die Bürste antreibenden Elektromotor samt Kraftübersetzungseinrichtung vor Überbeanspruchung oder sogar Zerstörung zu schützen, sowie die Leistung des Elektromotors konstant zu halten, wird vorgeschlagen, dass die Bürste an einer Wippe höhenveränderbar gelagert ist. Zufolge dieser Ausgestaltung ist eine Selbstentlastung bei erhöhter Reibung erreicht. So wird bei erhöhtem Widerstand an der Bürste diese entgegen der Schwerkraft entlastet. Bei weniger Widerstand an der Bürste ist die Entlastung entsprechend geringer. Bezüglich dieses erfindungsgemäßen Konzepts der Selbstentlastung bei erhöhter Reibung wird auf die DE 29 46 731 verwiesen, deren Inhalt hiermit vollinhaltlich in die Offenbarung vorliegender Erfindung mit einbezogen wird, auch zu dem Zwecke, Merkmale dieser Patentanmeldung in Ansprüche vorliegender Erfindung mit einzubeziehen. In vorteilhafter Weise ist vorgesehen, dass bei einem Bodenstaub-Aufsammelgerät mit zwei an einer Vertikalachse orientiert drehenden Kehrbürsten auch diese an der Wippe höhenveränderbar angeordnet sind, womit auch im Bereich dieser Eck-Kehrbürsten das Konzept der Selbstentlastung greift. So ist bevorzugt, dass sowohl die Kehrbürsten als auch die Bürste an einer gemeinsamen Wippe gehaltert sind, wobei weiter die Achse des die Bürste antreibenden Elektromotors horizontal angeordnet ist und mit einer Drehachse der Wippe zusammenfällt. Bevorzugt liegt hierbei der Elektromotor in Verfahrrichtung des Aufsammelgeräts hinter den Bürsten.

Weiter ist vorgesehen, dass Bürstenabschnitte der Kehrbürsten über eine durch die Abdeckhaube vorgegebene Randkontur des Gerätes hinausragen. So kann eine Anordnung der Kehrbürsten bei einer Abdeckhauben-Grundrissform, welche von einer Kreisform abweicht, in den, in Verfahrrichtung vorderen Eckbereichen angeordnet sein. Denkbar ist diesbezüglich jedoch auch eine kreisrun de Grundrissausgestaltung der Abdeckhaube. Wesentlich hierbei ist, dass zumindest der Bürstenkörper innerhalb der Gerätekontur liegt und nur die Borsten bzw. Borstenabschnitte über diese Kontur hinausragen. Bei einer bevorzugten Anordnung von weichen Borsten, welche sowohl seitlich als auch nach vorne über den Grundriss des Gerätes hinausragen, werden Wendigkeit und Mobilität des autonomen Gerätes nicht negativ beeinträchtigt. Die über die Gerätekontur hinausragenden Borstenabschnitte erfassen den Schmutz außerhalb der Gerätekontur und transportieren diesen in die Mitte in Richtung auf die um die Horizontalachse drehbare Bürste, welch letztere bevorzugt den Bodenstaub in einen gerätefesten Staubsammelbehälter wirft. Als besonderes vorteilhaft erweist sich diesbezüglich, dass die Bürste und die Kehrbürsten gemeinsam mittels eines Elektromotors angetrieben werden. So kann zur Momenten-Übertragung ein Getriebe vorgesehen sein. Bevorzugt wird jedoch eine Ausgestaltung, bei welcher der Elektromotor die Bürste antreibt und die Kehrbürsten mittels durch die Bürste angetriebener Transmissions-Riemen angetrieben werden. Zufolge dessen ist eine Synchronisation der Kehrbürsten und der Bürste erreichbar. So ist weiter vorgesehen, dass die Kehrbürsten mit einem Verhältnis zu der Bürste unterschiedlicher Drehzahl umlaufen. Bevorzugt wird diesbezüglich ein Übersetzungsverhältnis von Bürste auf Kehrbürsten von 3 bis 15 zu 1, wobei weiter der Abtrieb auf die Kehrbürsten so gewählt ist, dass diese gegensinnig um ihre Drehachsen umlaufen, so dass - bezogen auf eine in Verfahrrichtung vordere Randkante des Gerätes - die Kehrbürsten von außen nach innen in die Mitte arbeiten. Um das Kehrergebnis in Ecken oder Kanten, bspw. entlang von Fußleisten oder dergleichen, weiter zu verbessern, ist vorgesehen, dass die Drehachse einer Kehrbürste in Verfahrrichtung geneigt ist

Um eine Anpassung der Bürste bei ungleichmäßigen Bodenbelägen oder beim Übergang von einem Bodenbelag zu einem anderen Bodenbelag zu bieten, wird vorgeschlagen, dass die Bürste in einem, um eine horizontale Achse beweglichen Bodenteil aufgenommen ist Zufolge dessen ist eine Höhenanpassung der Bürste mitsamt dem zugeordneten Bodenteil erreichbar. Es ist somit stets eine optimale Anpassung der Bürstenhöhe an die Gegebenheiten erzielt Zudem wird vorgeschlagen, dass das Bodenteil eine gegenüber dem Bodenteil nach unten vorragende Rampe aufweist, welche kehrblechartig die durch die Bürste abgeworfenen Schmutz- und Staubpartikel in den Staubsammelbehälter leitet. Als besonders vorteilhaft erweist sich hierbei, dass die Rampe zu der Bürste hin aus dem Bodenteil auswächst. Eine optimale Anpassung und somit ein verbessertes Reinigungsergebnis wird des Weiteren dadurch erreicht, dass die Rampe relativ zu dem Bodenteil beweglich ist, so dass sich diese je nach Gegebenheiten mehr oder weniger aus dem Bodenteil heraus- oder zurückverlagert. Als besonders vorteilhaft erweist sich eine Ausgestaltung, bei welcher die Rampe zusätzlich oder alternativ relativ zu der Bürste beweglich ist. Auch ist vorgesehen, dass die Rampe in Verfahrrichtung gesehen hinter der Bürste angeordnet ist, so dass die entgegen der Verfahrrichtung nach hinten abgeworfenen Partikel über die Rampe in den Staubsammelbehälter gelangen. Die erwähnte in Wurfrichtung ausweichbare Anordnung der Rampe kann dadurch gelöst sein, dass die Rampe mehrteilig gebildet teleskopartig oder lamellenartig in Wurfrichtung zusammengeschoben bzw. entgegen der Wurfrichtung, bspw. federunterstützt, ausgezogen wird. Vorgeschlagen wird diesbezüglich weiter, dass die Rampe um eine Drehachse verschwenkbar ist, wobei sich als besonders vorteilhaft erweist, wenn die Drehachse der Rampe mit einer Bürstenachse zusammenfällt. Die Rampe wird somit im vorderen Bereich derselben auf einer definierten Bahn geführt, wodurch eine Kollision mit der Bürste ausgeschlossen ist. Bevorzugt wird diesbezüglich weiter, dass die Rampe gegen Federkraft ausweichbar ist. Die Feder der Rampe kann hierbei in die Rampenfläche integriert angeordnet sein, wobei bezüglich einer bevorzugten Ausgestaltung vorgeschlagen wird, dass die Rampe jedenfalls in ihrem federbaren Teil aus einem folienartig dünnen Bandelement gebildet ist. Letzteres kann ein folienartig dünnes Metallelement sein. Bevorzugt wird jedoch, dass das Bandelement eine Kunststofffolie mit flexiblen Eigenschaften ist. Dieses federbare Bandelement drückt die freie, den zu pflegenden Boden kontaktierende Schaufelkante in der Art einer vorgespannten Biegefeder in Richtung der Bürste nach vorne. Im vorderen Randbereich ist das Bandelement bevorzugt seitlich an Gleitschuhen befestigt, die wiederum drehbar um die Bürstenachse gelagert sind. Die freie Rampenkante ist bevorzugt eine verschleißresistente Metall- oder Kunststoffkante. Bei einer Ausbildung des Bandelementes aus Kunststofffolie weist diese eine Dicke von 0,5 bis 1,5 mm auf. Fährt das Aufsammelgerät im Betrieb über einen Teppich- oder Hartboden, so drückt die Kunststofffolie die Schaufelkante der Rampe immer mit leichtem Druck bedingt durch die Vorspannung auf den Boden. Bei hohen Teppichen taucht die Rampe weit ein, wodurch die Gleitschuhe weit nach hinten gedreht werden. Die Anpresskraft ist in diesem Fall maximal. Bei Hartböden taucht die Rampe weniger weit ein, womit die Gleitschuhe entsprechend wenig nach hinten gedreht werden. Die Anpresskraft ist in diesem Fall geringer. Die Rampe ist so ausgelegt, dass sie auch bis zu 4 mm in Vertiefungen eintauchen kann, ohne darin hängen zu bleiben. In einer Weiterbildung des Erfindungsgegenstandes ist vorgesehen, dass die Staubdurchsatzkontrolle aus einer Infrarot-Lichtschranke besteht Diese ist im Bereich des zu dem Staubsammelbehälter führenden Staubzuführkanals angeordnet und zählt innerhalb eines vorgegebenen Zeitfensters von 0,5 bis 2 Sekunden die, die Lichtschranke passierenden Staubpartikel. Das Messergebnis kann zur Änderung der Verhaltensstrategie des selbsttätig verfahrbaren Bodenstaub-Sammelgeräts führen. So ist vorgesehen, dass ein ermittelter hoher Staubdurchsatz im Sinne eines wiederholten Abfahrens der den erhöhten Staubdurchsatz erbracht habenden Fahrtstrecke ausgewertet wird. Ein erhöhter Staubdurchsatz ist mit einem erhöhten Verschmutzungsgrad des in diesem Moment abgefahrenen Bodenbereichs verbunden. Über die Messauswertung wird das Aufsammelgerät veranlasst, diesen zuvor bereits gekehrten Bereich nochmals abzufahren. Um den Elektromotor der Bürste bspw. bei einem Blokkieren oder einer Überlastung der Bürste zu schützen, ist weiter vorgesehen, dass der Motorstrom des die Bürste antreibenden Elektromotors zur Auswertung herangezogen ist und dass in Abhängigkeit des Motorstroms eine Änderung der Verfahrroutine des Bodenstaub-Aufsammelgeräts erfolgt. In einfachster Weise ist eine Überschreitung des Motorstroms durch Überwachung der Spannung detektierbar. Ein Überlastbetrieb des Elektromotors kann durch zwei Zustände ausgelöst werden. Zum einen blockiert die Bürste völlig und zum anderen wird sie mechanisch stark belastet. Die völlige Blockierung kann abgefangen werden, indem bei einer Erhöhung des Motorstroms um einen großen Wert die Bürste nach einer vorgegebenen - kurzen - Zeit abgeschaltet wird. Bei einer starken mechanischen Beanspruchung wird die Bürste ausgeschaltet, wenn der Strom eine vorgegebene Zeit lang über einem erhöhten Grenzwert liegt. Bei beiden Lösungen wird die Überlastung des Elektromotors verhindert. Da der Einschaltstrom des Elektromotors deutlich über den Grenzwerten liegt, wird die Überwachung beim Einschalten des Elektromotors unterbunden. Wickelt die Bürste bspw. Fransen oder ein Kabel auf, so wird dieser Zustand über den Motorstrom erkannt, wonach das Bodenstaub-Aufsammelgerät geeignet auf diese Situation reagiert, um die Blockierung aufzuheben. Dies wird bspw. dadurch gelöst, dass bei unzulässig erhöhtem Motorstrom ein Zurückfahren des Bodenstaub-Aufsammelgeräts erfolgt. Hierbei erfolgt bevorzugt auch eine Drehung der Bürste in der der üblichen Bearbeitungsrichtung entgegengesetzter Drehrichtung, womit aufgewickelte fransen oder Kabel wieder freigegeben werden können. Sofern dies nicht gelingt und die Bürste mit aufgewickeltem Kabel oder Fransen wieder einschaltet, wird dies über die vorgesehene Elektronik schnell erkannt, um hiernach die Kraft an der Bürste so gering wie möglich zu halten, um ein weiteres Verklemmen zu verhindern. Hierfür wird zusätzlich der Einschaltstrom des Motors überwacht Aus diesem Grund teilt sich die Überwachung in zwei Teile, das Einschalten und den Betrieb. Der Einschaltstrom ist in beiden Situationen - Bürste blockiert oder ist frei - bis zu einem bestimmten Zeitpunkt gleich. Demnach muss als erstes dieser Zeitpunkt bestimmt werden. Ein einzelner Messwert ist aber aufgrund von Schwankungen des Stroms als Entscheidungsgrundlage ungeeignet, weshalb eine Summenbildung über einen bestimmten Zeitraum, der so kurz wie möglich gehalten ist, bevorzugt wird. Das Ergebnis ist eine Überwachung des Anlaufstroms. So ist vorgesehen, dass zunächst die Bürste eingeschaltet wird und hiernach bspw. 45 Millisekunden abgewartet wird. Hiernach wird für bspw. 2 Millisekunden die Summe des Stroms mit vorgegebener Abtastfrequenz gebildet und das Ergebnis mit einem Grenzwert verglichen. Die Summenbildung und der Vergleich dauern ca. 6 Millisekunden. Demnach dauert die gesamte Überwachung ca. 31 Millisekunden. Da ein Relais, welches die Bürste schaltet, eine Einschaltverzögerung von ca. 10 Millisekunden und eine Ausschaltverzögerung von ca. 5 Millisekunden besitzt, ist die Bürste während dieses Vorganges für ca. 20 Millisekunden eingeschaltet. Davon 10 Millisekunden während der Überwachung und 5 Millisekunden aufgrund der Ausschaltverzögerung des Relais. Vorgeschlagen wird diesbezüglich weiter, dass beginnend mit einem Schwellwert des erfassten Motorstroms ein Zeitfenster ausgelöst wird, innerhalb dessen eine weitere Erhöhung des Motorstroms als Auslöseereignis für ein Zurückfahren des Bodenstaub-Aufsammelgeräts herangezogen wird.

Zudem betrifft die Erfindung eine Kombination eines selbsttätig verfahrbaren Bodenstaub-Aufsammelgerätes mit einem elektromotorischen Antrieb, einem Staubsammelbehälter und einer Abdeckhaube, und einer Basisstation, welche mit dem Aufsammelgerät nach dem Sender-/ Empfänger-Prinzip gekoppelt ist Um eine Kombination der in Rede stehenden Art in vorteilhafter Weise zu verbessern, wird vorgeschlagen, dass die Basisstation einen gesondert verwendbaren Staubsauger aufweist und dass das Aufsammelgerät als Kehrgerät ausgebildet ist Die Basisstation weist somit neben der üblichen Funktion als Parkplatz und Ladestation für das autonom arbeitende Bodenstaub-Aufsammelgerät auch eine Entleerungsstation auf, wozu mittels des an der Basisstation vorgesehenen Staubsaugers der Staubsammelbehälter des als Kehrgerät ausgebildeten Aufsammelgerätes ausgesaugt wird. Denkbar ist hierbei eine Lösung, bei welcher der Staubsauger der Basisstation in einem Stand-By-Betrieb verweilt und das lediglich kehrende Arbeiten verrichtende Aufsammelgerät beim Andocken an die Basisstation einen Kontakt zur Inbetriebnahme des Staubsaugers auslöst. Als besonders vorteilhaft erweist es sich, wenn der Staubsauger ein üblicher Haushaltsstaubsauger ist, welcher gegebenenfalls über entsprechend ausgeformte Adapter mit der Basisstation gekoppelt wird, so dass dieser Staubsauger auch in üblicher Weise zur Boden- oder Überbodenreinigung genutzt werden kann. Das Bodenstaub-Aufsammelgerät kann alternativ oder auch kombinativ hierzu eine Schnittstelle zum direkten Absaugen ohne Basisstation aufweisen. Um sicherzustellen, dass das autonom arbeitende Aufsammelgerät sicher die Basisstation erreicht, dient letztere als Landmarke. Diesbezüglich sind Lösungen bekannt, bei welchen eine Landmarke ein Signal, welches vom autonomen Gerät empfangen und ausgewertet werden kann, sendet. Diesbezüglich sind optische Landmarken, welche mit Infrarot-Licht, Laser oder sichtbarem Licht arbeiten, und Ultraschall-Landmarken bekannt. Beide Lösungen haben den Nachteil, dass das Signal der Landmarke von Hindernissen, wie Wände, Gegenstände usw., abgeschattet wird. Somit kann die Basisstation nur dann sicher angefahren werden, wenn ein direkter geradliniger Kontakt zum autonomen Gerät besteht. Erfindungsgemäß ist eine Landmarke vorgesehen, welche mittels eines Senders elektromagnetische Wellen aussendet Die mit Hilfe eines Schwingkreises erzeugten und durch eine Antenne gesendeten Wellen durchdringen die meisten Hindernisse und sind somit weitestgehend sicher vor Abschattung. Da die elektromagnetischen Feldlinien, die dem autonomen Gerät zur Orientierung dienen sollen, über keinen linearen Verlauf verfügen, muss das autonome Gerät seine Verhaltensweise an der Form des Feldes ausrichten. Mit Hilfe einer Kombination aus leistungsfähiger Landmarke und sinnvoller, jedoch einfacher Verhaltensweise wird das autonome Gerät in die Lage versetzt, die Basisstation auch dann zu finden, wenn Hindernisse den direkten Weg versperren. Das autonome Gerät besitzt hierzu eine oder zwei Empfangsantennen mit deren Hilfe die Ausrichtung der magnetischen Feldlinien ermittelt werden kann. Das autonome Gerät orientiert sich beim Zurückfahren zur Basisstation, die den Sender enthält, an den Feldlinien in dem das Gerät entweder den Feldlinien folgt - fahren in Richtung des stärksten Signals -, senkrecht zu diesen fährt oder eine gemischte Strategie einsetzt Trifft das autonome Gerät auf ein Hindernis, greift eine sensorunterstützte Verhaltensstrategie, die das Umfahren des Hindernisses ermöglicht Anschließend wird der Weg zur Basisstation fortgesetzt.

Die Erfindung betrifft weiterhin eine Kombination nach den Merkmalen des Oberbegriffs des Anspruchs 40. Um eine Kombination der in Rede stehenden Art in vorteilhafter Weise zu verbessern, wird vorgeschlagen, dass die Basisstation als Raumluftreinigungsgerät mit einer Andockkupplung für das Bodenstaub-Aufsammelgerät ausgebildet ist. Ein derartiges, mit einem gesondert verwendbaren Staubsauger kuppelbares Raumluftreinigungsgerät ist aus der DE 44 14 871 A1 bekannt. Der Inhalt dieser Patentanmeldung wird hiermit vollinhaltlich in die Offenbarung vorliegender Erfindung mit einbezogen, auch zu dem Zweck, Merkmale der Patentanmeldung in Ansprüche vorliegender Erfindung mit einzubeziehen. Dieses ist nunmehr erfindungsgemäß kombiniert mit einer Andockkupplung für das Bodenstaub-Aufsammelgerät derart, dass die so gebildete Basisstation als Parkplatz für das Bodenstaub-Aufsammelgerät und darüber hinaus auch als Entleerungsstation für dieses dient. Zufolge dieser erfindungsgemäßen Ausgestaltung kann die Basisstation zumindest bei in Betrieb befindlichem Bodenstaub-Aufsammelgerät als Raumluftreinigungsgerät arbeiten. Denkbar ist auch, die Raumluftreinigungsaktivität der Basisstation auch während des Ladevorganges des Bodenstaub-Aufsammelgeräts beizubehalten. Weiter denkbar ist auch eine Kombination, bei welcher die Basisstation einen Kontakt aufweist, welcher beaufschlagt durch das Bodenstaub-Aufsammelgerät in dessen Parkstellung des Absaugen des aufgesammelten Schmutzes durch den gesonderten Staubsauger bewirkt und bei Nichtbeaufschlagung des Kontaktes die Raumluftreinigung aktiviert. Diesbezüglich kann weiter vorgesehen sein, dass die Basisstation weiter eine oder mehrere Andockkupplungen für weitere Geräte, bspw. im Sinne einer Ladestation, aufweist. Zufolge dieser Ausgestaltung kann die Basisstation auch als Ladestation für bspw. Handakku-Sauggeräte dienen.

Auch betrifft die Erfindung ein Verfahren zum Betreiben eines selbsttätig verfahrbaren Bodenstaub-Aufsammelgeräts nach den Merkmalen des Oberbegriffs des Anspruches 6. Um hier ein Verfahren der in Rede stehenden Art anzugeben, welches hinsichtlich des Reinigungsergebnisses verbessert ausgebildet ist, wird vorgeschlagen, dass ein einer jeweiligen Verfahrstrecke zugeordneter Staubanfall ausgewertet wird und dass in Abhängigkeit von einem vorgegebenen Schwellwert die einem erhöhten Staubanfall zugeordnete Verfahrstrecke noch einmal abgefahren wird. Hierbei wird mittels einer bevorzugt in Form einer Infrarot-Lichtschranke ausgebildeten Staubdwrchsatzkontrolle, welche in einem zu dem Staubsammelbehälter führenden Staubzuführkanal angeordnet ist, die passierenden Staubpartikel gezählt. Dabei wird die Lichtschranke unterbrochen, d. h. der Infrarot-Lichtstrahl wird abgeschattet, so dass beim Empfänger kein Licht ankommt und ein Signal erzeugt wird. Die Einzelsignale werden in einem Mikroprozessor über eine vorgegebene Zeit von bspw. 0,5 bis 2 Sekunden, bevorzugt 1 Sekunde gezählt. Die ermittelte Zahl der Ereignisse wird mit einem gesetzten Grenzwert verglichen und bei Überschreiten wird ein angepasstes Schmutzverhalten des selbsttätig verfahrbaren Bodenstaub-Aufsammelgerätes gesteuert, so bevorzugt durch mehrfaches Befahren der Fläche oder auch Abfahren eines Fächers oder ähnlicher Muster, um den stark verschmutzten Bereich zufriedenstellend zu reinigen. Ziel ist die intensive Reinigung der als stärker verschmutzt erkannten Fläche. Das angepasste Schmutzverhalten bzw. die angepasste Verfahrroutine wird abgebrochen, sobald bei der kontinuierlichen Messung keine erhöhten Werte mehr ermittelt werden.

Schließlich betrifft die Erfindung ein Verfahren zum Rückfahrverhalten eines selbsttätig verfahrbaren Bodenstaub-Aufsammelgeräts nach den Merkmalen des Oberbegriffs des Anspruchs 6, wobei das Bodenstaub-Aufsammelgerät über Stoß- und/ oder Abstandssensoren verfügt und das Rückfahrverhalten auf einem vorprogrammierten Ablauf beruht, wobei darüber hinaus die Orientierung anhand eines von einer Basisstation aufgebauten elektromagnetischen Feldes erfolgt. Das Verfahrverhalten des selbsttätig verfahrbaren Bodenstaub-Aufsammelgeräts unterscheidet sich von der üblichen Verhaltensstrategie zum Verfahren einer bekannten Fläche. Bei letzterer wird ein Pseudozufallsverhalten bevorzugt. Hierbei werden für jeden der bevorzugt drei Stoßund/ oder Abstandssensoren im Frontbereich mittels Simulation optimierte Drehwinkel berechnet Diese bestehen aus einem fixen Anteil von bspw. 60° und einem Winkelbereich von bspw. +/- 10° um den fixen Winkelbetrag herum, aus dem im Betrieb ein Zufallswinkel berechnet wird. Bei dem Rückfahrverhalten hingegen wird bevorzugt, dass zunächst eine Auswertung des elektromagnetischen Feldes durch das Bodenstaub-Aufsammelgerät, etwa durch eine 360°-Drehung des Bodenstaub-Aufsammelgeräts erfolgt und sodann orientiert an den erfassten Minimawerten und ausgerichtet an einem der beiden Minimawerte ein Verfahren über eine vorbestimmte Strecke erfolgt, wonach die vorgenannten Schritte wiederholt werden. Hierzu ist bspw. die Antenne auf dem Bodenstaub-Aufsammelgerät quer und an der Basisstation längs angeordnet, wobei jedoch auch andere Anordnungen denkbar sind. Die Drehbewegungen können kontinuierlich oder auch schrittweise sein. Nach einem Ausmessen der Maxima und Minima durch 360°-Drehung werden die Maximawerte gespeichert. Hiernach erfolgt eine Entscheidung über eine Messbereichsumschaltung und eine Ausrichtung an einem der beiden Minima. Nach einem Fahren einer Strecke von bspw. 20 bis 60 cm, erfolgt ein erneutes Messen durch 360°-Drehung und der Erfassung weiterer Maximawerte. So ist weiter vorgesehen, dass im Falle einer wiederholten Messung durch eine 360°-Drehung eine größere maximale Feldstärke als bei der vorhergehenden Messroutine ermittelt wird, eine Drehung in Richtung des entgegengesetzten Minimums erfolgt. Ist demnach der zuerst ermittelte Maximawert größer als der zweite Maximawert, so ist die falsche Richtung gewählt, was als Reaktion die Drehung entgegengesetzt der zuvor gewählten Richtung zur Folge hat. Ist hingegen der zuerst gemessene Maximawert kleiner als der zweite Maximawert, so hat sich das Gerät in die richtige Richtung bewegt Die Fahrt wird fortgesetzt. Ein Stoß oder optische Hinderniserkennung führt zum Modus Hindernisverhalten. Diesbezüglich wird vorgeschlagen, dass in dem Fall, dass das Gerät auf ein Hindernis trifft, zunächst ein Zurückverfahren erfolgt, daraufhin ein Verschwenken um einen gewählten Winkel oder einen Zufallswinkel in einer bestimmten Drehrichtung, wieder ein Vorwärtsfahren und Wiederholung der vorgenannten Schritte erfolgt, bis kein Hinderniskontakt mehr vorliegt. Dementsprechend erfolgt nach einem kurzen Zurücksetzen eine kleine Drehung weg vom Hindernis, wobei die Drehwinkel gespeichert und summiert werden. Weiter werden auch die Stoßereignisse gezählt. Hiernach erfolgt die Fahrt des Geräts vorwärts über eine vorgegebene Strecke von bspw. 20 bis 60 cm oder gegebenenfalls bis zu einem weiteren Hinderniskontakt. Auch ist vorgesehen, dass abhängig von einer vorbestimmten Anzahl von Hinderniskontakten nach dem Zurückfahren eine Drehung um einen Zufallswinkel vorgenommen wird. Falls die Anzahl der gezählten Hinderniskontakte (Stöße) einen Grenzwert überschreitet bzw. wenn der Gesamtdrehwinkel einen Grenzwert überschreitet, bricht das autonom arbeitende Gerät durch Drehung um einen zufälligen Winkel aus dem angepassten Verhalten bei Hinderniskontakt aus. Diesbezüglich wird weiter vorgeschlagen, dass abhängig von einer vorbestimmten Anzahl von Hinderniskontakten nach dem Zurückfahren eine Neuorientierung an dem elektromagnetischen Feld vorgenommen wird. Weiter ist vorgesehen, dass nach erfolgreichem Umfahren eines Hindernisses eine Rückdrehung um den zum Umfahren des Hindernisses erforderlichen Winkelbetrag durchgeführt wird. Dementsprechend erfolgt eine Drehung in Gegenrichtung entsprechend des Gesamtdrehwinkels, wonach der Zähler für Winkel- und Stoßereignisse auf Null gesetzt wird. Hiernach erfolgt eine Feinausrichtung am elektromagnetischen Feld und Fortsetzung der Fahrt. Die Länge der Fahrstrekke ist dem Messbereich angepasst. So ist vorgesehen, dass mit zunehmender Annäherung an die Basisstation die vorgenommene Verfahrstrecke kürzer gesetzt wird. Je mehr sich das Aufsammelgerät der Basisstation nähert, desto stärker wird das Signal, was in kürzere Fahrstrecken umgesetzt wird. Als vorteilhaft erweist sich weiter, dass jedenfalls im Hinblick auf kleinere Richtungsänderungen auch während des Verfahrens eine Ausrichtung an die Feldstärke vorgenommen wird. So ist auch ein Drehen der Fahrtrichtung auch bei gleichzeitiger Vorwärtsfahrt möglich. Es erfolgt ein wiederholtes Ausrichten bis sich das Bodenstaub-Aufsammelgerät unmittelbar vor der Basisstation befindet Hiernach kann eine Drehung um 180° erfolgen, wonach abschließend mittels Rückwärtsfahrt das Andocken an die Basisstation erfolgt. Hierbei wird ein Endschalter oder Kontakt zu einem Ladestecker betätigt zum Aufladen des Aufsammelgerätes und gegebenenfalls zur Entleerung desselben. Denkbar ist auch, dass das Aufsammelgerät 1 vorwärts, d. h. in üblicher Verfahrrichtung auf die Basisstation fährt.

Die Hindernis-Erkennung kann über Kontakt, Infrarot-Schaltsensoren, Ultraschall-Sensoren usw. vorgenommen sein. Diese Sensoren sind bevorzugt in Verfahrrichtung im vorderen Bereich des Gerätes angeordnet, wobei eine Unterscheidung nach vorne rechts und vorne links vorgenommen werden kann, wodurch das Bewegungs-Management beeinflusst wird. Es ist auch eine Anordnung der Sensoren im Heckbereich des Gerätes möglich. Grundsätzlich gilt bei einer Kollision, dass zunächst zurückgefahren und das Gerät gedreht wird und hiernach dieses in eine neue Richtung fährt. Im Zuge des Zurückfahrens und des Drehens sind bevorzugt die elektromotorisch angetriebenen Bürsten zur Energieeinsparung ausgeschaltet. Des Weiteren weist das autonome Gerät ein Stützrad auf, welches in Verfahrrichtung im hinteren Bereich des Gerätes angeordnet sein kann. Es sind jedoch auch Lösungen denkbar, dieses Stützrad im vorderen Bereich, gegebenenfalls zwischen den Kehrbürsten anzuordnen. Bei dieser Ausgestaltung ist einer unbestimmten Vierpunkt-Auflage entgegengewirkt, also der Gefahr, dass ein Antriebsrad den Kontakt zum Boden verliert. Auch das Hochfahren einer leichten Rampe ist hierdurch ermöglicht.

Nachstehend ist die Erfindung anhand der beigefügten Zeichnungen, welche lediglich mehrere Ausführungsbeispiele darstellen, näher erläutert. Es zeigt:
- Fig. 1: eine perspektivische Darstellung eines Bodenstaub-Aufsammelgerätes mit Kehrbürsten, eine erste Ausführungsform betreffend;
- Fig. 2: eine perspektivische Unteransicht hierzu;
- Fig. 3: eine partiell aufgebrochene, perspektivische Darstellung des Gerätes;
- Fig. 4: eine schematische Detaildarstellung einer Kehrbürste, bei seitlicher Betrachtung;
- Fig. 5: eine weitere schematische Detaildarstellung einer Kehrbürste in Draufsicht;
- Fig. 6: die Draufsicht auf ein Aufsammelgerät in einer zweiten Ausführungsform;
- Fig. 7: eine partiell aufgebrochene, perspektivische Darstellung eines Aufsammelgerätes in einer dritten Ausführungsform;
- Fig. 8: die Draufsicht hierzu;
- Fig. 9: eine partiell geschnittene Detaildarstellung eines Abfederungsbereiches einer Abdeckhaube des Gerätes;
- Fig. 10: eine der Fig. 9 entsprechende Darstellung, jedoch bei Vertikalbelastung der Abdeckhaube;
- Fig. 11: eine weitere der Fig. 9 entsprechende Darstellung, jedoch bei seitlicher Belastung der Abdeckhaube;
- Fig. 12: eine perspektivische Darstellung eines Aufsammelgerätes in einer weiteren Ausführungsform;
- Fig. 13: eine der Fig. 12 entsprechende Darstellung, jedoch nach Abnahme der Abdeckhaube;
- Fig. 14: eine perspektivische Unteransicht des Aufsammelgerätes gemäß der Ausführungsform in Fig. 12;
- Fig. 15: einen Längsschnitt durch das Aufsammelgerät;
- Fig. 16: eine schematische Darstellung einer Basisstation zum Laden und Entleeren des Aufsammelgerätes und
- Fig. 17: eine Prinzipdarstellung zur Erläuterung des selbständigen Auffindens der Basisstation, durch von letzterer ausgesendeter elektromagnetischer Wellen;
- Fig. 18: eine der Fig. 14 entsprechende perspektivische Unteransicht des Aufsammelgeräts gemäß einer weiteren Ausführungsform;
- Fig. 19: einen schematischen Längsschnitt durch das Aufsammelgerät, eine weitere Ausführungsform betreffend;
- Fig. 20: die Herausvergrößerung des Bereiches XX in Fig. 19;
- Fig. 21: eine schematische Schnittdarstellung, den Bereich des Fahrwerks in einer weiteren Ausführungsform;
- Fig. 22: eine der Fig. 21 entsprechende Darstellung, jedoch bei aus dem Normalbetrieb herausverlagertem Fahrwerk;
- Fig. 23: den vergrößerten Schnitt gemäß der Linie XXIII-XXIII in Fig. 21;
- Fig. 24: eine schematische Darstellung der Verhaltensstrategie des Aufsammelgerätes beim Rückfahren zur Basisstation;
- Fig. 25: eine der Fig. 24 entsprechende Darstellung, jedoch das Rückfahrverhalten bei Hinderniserkennung betreffend.

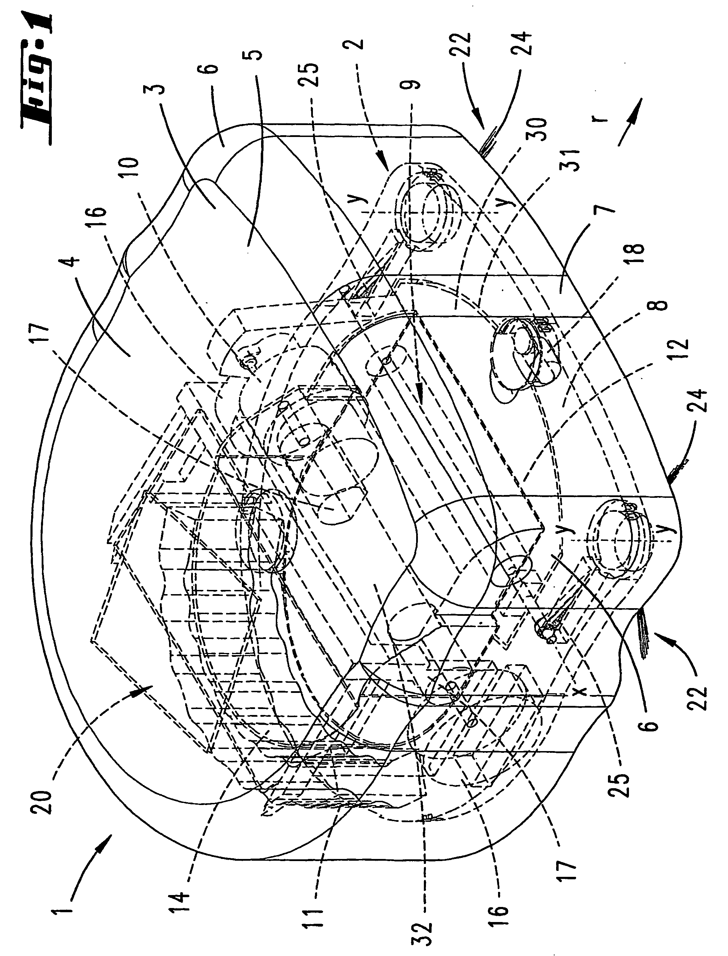

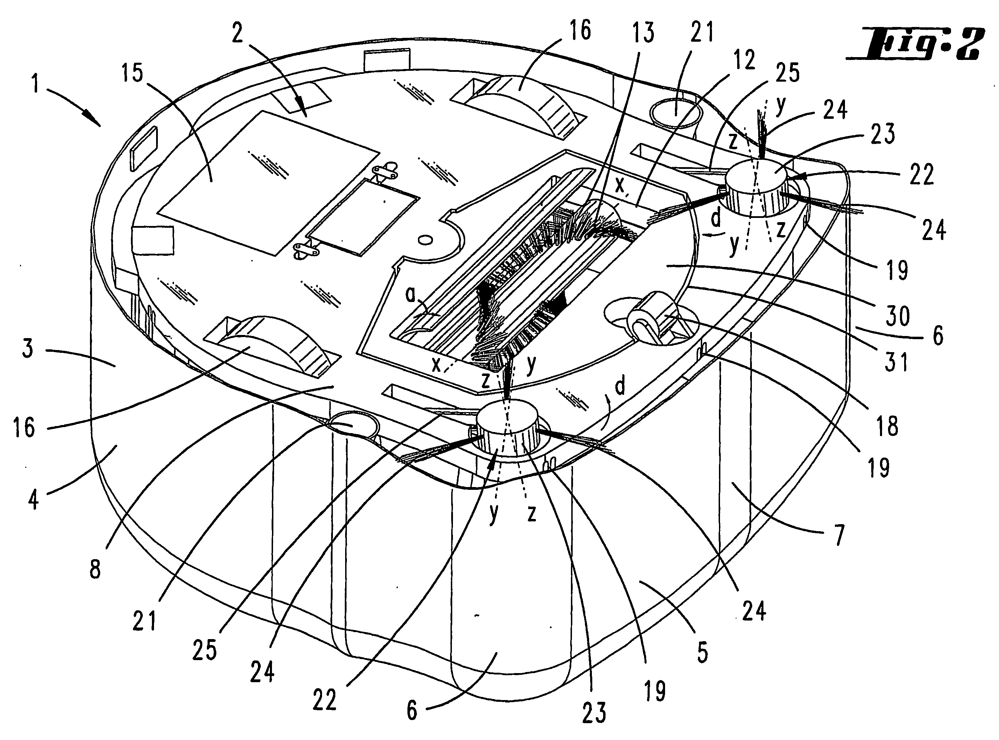

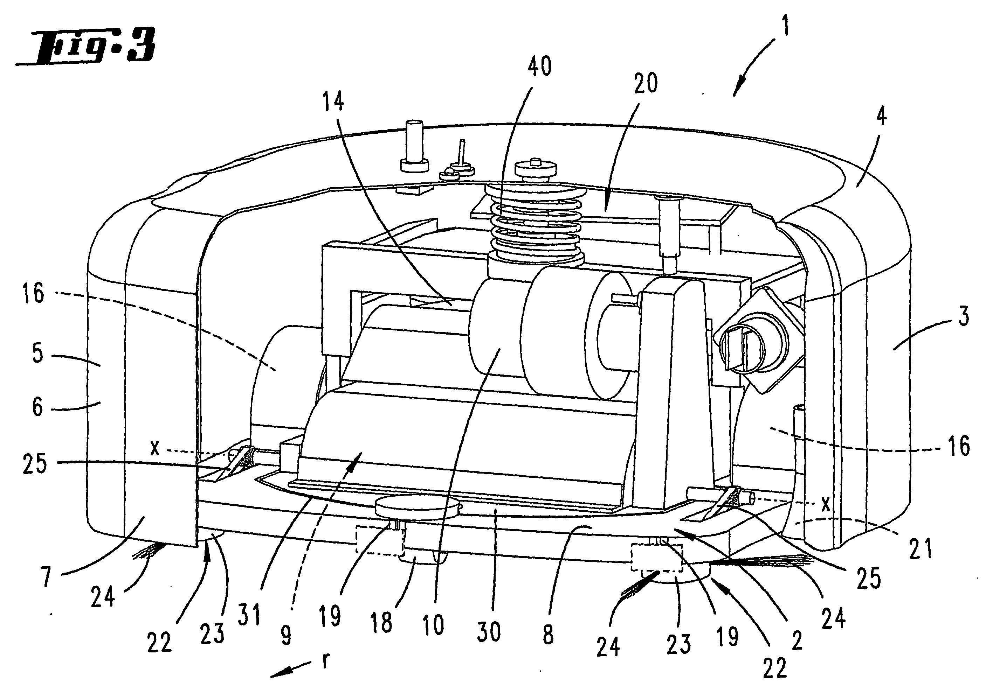

Dargestellt und beschrieben ist zunächst mit Bezug zu den Fig. 1 bis 3 ein selbsttätig verfahrbares Bodenstaub-Aufsammelgerät 1 mit einem Chassis 2 und einer das Chassis 2 überdeckenden Abdeckhaube 3.

Wie insbesondere aus den Darstellungen in den Figuren 1 und 2 zu erkennen, weist das Gerät 1 einen von einer Kreisform abweichenden Grundriss auf. So setzt sich der Grundriss sich aus einem halbkreisförmigen Kreisformabschnitt 4 und einem hieran anschließenden, an einem Rechteck orientierten Formabschnitt 5 zusammen, wobei der Rechteckabschnitt 5 in Verfahrrichtung r des Gerätes 1 vorne ausgeformt ist

Der Rechteckabschnitt 5 ist im Grundriss insbesondere in den Eckbereichen 6 verrundet. Auch die - in Verfahrrichtung r betrachtete - Kontur der, die Eckbereiche 6 verbindenden Stimrandfläche 7 ist konvex ausgeformt. Darüber hinaus sind auch die seitlichen Übergangsbereiche zwischen den Eckabschnitten 6 und dem Kreisformabschnitt 4 konkav verrundet, so dass sich hier eine leichte taillenartige Einziehung des Grundrisses ergibt.

Die zuvor beschriebene Grundrissausgestaltung bezieht sich sowohl auf die Ausformung des Gerätebodens 8 als auch auf die Außenkontur der chassisseitigen, das Chassis 2 überfangenden und den Geräteboden 8 umfassenden Abdeckhaube 3.

Das autonom arbeitende Aufsammelgerät 1 ist als Kehrgerät ausgebildet, wozu eine um eine Horizontalachse x drehbare Bürste 9 vorgesehen ist, welche in dem dargestellten Ausführungsbeispiel im Bereich des Rechteckabschnittes 5 angeordnet ist. Der Antrieb der Bürste 9 erfolgt über einen Elektromotor 10, welcher von einem, im rückwärtigen Kreisformabschnitt 4 angeordneten Akkumulator-Paket 11 gespeist wird.

Im Bereich der Bürste 9 ist der Geräteboden 8 mit einem fensterartigen Ausschnitt 12 versehen, durch welchen die Borsten 13 der Bürste 9 über die Unterseite des Gerätebodens 8 zur kehrenden Reinigung des zu pflegenden Fußbodens vorragen. Die Bürste 9 weist mäanderförmig angeordnete Borstenreihen auf, wobei die Anordnung dieser Reihen weiter so gewählt ist, dass - bezogen auf die Horizontalachse x - ein Kehren von außen nach innen und - in Verfahrrichtung r betrachtet - von vorne nach hinten erfolgt.

Der mittels der Bürste 9 aufgesammelte Bodenstaub wird in einen rückwärtigen, im Bereich des Kreisformabschnittes 4 gerätefest auf dem Chassis 2 angeordneten Staubsammelbehälter 14 geworfen. Zur Entleerung dieses Behälters 14 ist geräteunterseitig im Bereich des Bodens 8 eine öffenbare Klappe 15 vorgesehen.

Das Aufsammelgerät 1 weist zudem zwei, teilweise den Geräteboden 8 durchsetzende Verfahrräder 16 auf, wobei jedes Verfahrrad 16 über einen gesonderten Elektromotor 17 angetrieben wird, womit neben dem üblichen, geradlinigen Verfahren des Gerätes 1 auch ein Drehen bzw. Wenden desselben ermöglicht ist.

Die Anordnung der Verfahrräder 16 ist weiter so gewählt, dass diese nahe der Randkante des Gerätebodens 8 im Übergangsbereich von Rechteckabschnitt 5 zu Kreisformabschnitt 4 positioniert sind.

Zudem ist im vorderen, der Stirnrandkante 7 zugeordneten Bereich mittig eine Stützrolle 18 vorgesehen, womit eine Dreipunkt-Auflage des Gerätes 1 auf dem Fußboden 41 erreicht wird.

Zur Hinderniserkennung sind im Bereich der Stirnrandfläche 7 Sensoren 19 vorgesehen. Vorzugsweise werden hierbei drei Sensoren 19 so angeordnet, dass ein mittiger Sensor 19 zur Erkennung von Frontalstößen und die zwei weiteren Sensoren 19 in den Eckbereichen 6 zur Erkennung von Stößen, die seitlich von vorne auf das Gerät 1 einwirken dienen. Diesbezüglich können mechanisch wirksame Kontaktschalter aber auch Infrarot-Schaltsensoren oder Ultraschall-Sensoren Verwendung finden. Bevorzugt kommen Mikroschalter zum Einsatz.

Das Anstoßen gegen ein Hindernis bewirkt eine leichte Verlagerung der, das Chassis 2 überfangenden Abdeckhaube 3, welche Verlagerung durch den zugeordneten Sensor 19 erfasst wird. Ein in einer - in den Darstellungen nur schematisch angedeuteten - Logikeinheit 20 hinterlegtes Bewegungs-Management veranlasst bei einer Hinderniserkennung das Zurückfahren des Gerätes 1 und das Drehen des Gerätes 1 in eine neue Richtung. Das Zurückfahren erfolgt hierbei nur über einen kurzen Weg, so dass eine Kontrolle nach hinten, das heißt entgegen der üblichen Verfahrrichtung r, nicht nötig ist. Das Drehen des Gerätes 1 erfolgt über die unterschiedliche Ansteuerung der Verfahrräder 16. Als besonders vorteilhaft erweist sich hierbei, dass bei dem Zurückfahren und dem Drehen der Elektromotor 10 für die Bürste 9 zur Energieeinsparung ausgeschaltet wird.

Zur Erkennung von Stufen oder dergleichen ist das Aufsammelgerät 1 des Weiteren mit Ultraschall-Sensoren 21 versehen, welche in dem dargestellten Ausführungsbeispiel seitlich des fensterartigen Ausschnittes 12 des Gerätebodens 8, nach unten in Richtung auf den Fußboden 41 gerichtet angeordnet sind. Wesentlich hierbei ist, dass die Ultraschall-Sensoren 21 in Verfahrrichtung r vor einem Schwerpunkt des Gerätes 1 liegen. Mittels dieser Ultraschall-Sensoren 21 wird im Zuge des Verfahrens der Fußboden 41 abgetastet. Bezüglich der Anordnung und der Verfahrensweise der Ultraschall-Sensoren 21 wird auf die nicht vorveröffentlichte deutsche Patentanmeldung mit dem Aktenzeichen 10113 105.4 verwiesen. Der Inhalt dieser Patentanmeldung wird hiermit vollinhaltlich in die Offenbarung vorliegender Erfindung mit einbezogen, auch zu dem Zwecke, Merkmale dieser Anmeldung in Ansprüche vorliegender Erfindung mit einzubeziehen.

Um auch in Ecken oder entlang von Fußleisten usw. reinigen zu können sind zwei, jeweils einem Eckbereich 6 zugeordnete Kehrbürsten 22 vorgesehen. Diese setzen sich jeweils zusammen aus einem antreibbaren Bürstenkörper 23 mit im Wesentlichen kreisförmigem Grundriss und drei umfangsgleich verteilt an dem Bürstenkörper 23 angeordneten Borstenbüscheln 24.

Die Anordnung der Kehrbürsten 22 ist hierbei so gewählt, dass die Bürstenkörper 23 innerhalb des Grundrisses des Aufsammelgerätes 1 liegen, die Borstenbüschel 24 hingegen über die, durch die Abdeckhaube 3 vorgegebene Randkontur hinausragen und somit kehrend entlang von Fußleisten oder in Eckbereichen den Bodenstaub transportieren. Zufolge dessen wird auch Schmutz außerhalb der Gerätekontur erfasst und aufgrund der gewählten, gegensinnigen Drehrichtung (siehe Pfeile d in Fig. 2) in die Mitte des Gerätes 1 in Richtung auf die um die Horizontalachse x drehende Bürste 9 transportiert. Da hierbei weiche Borsten über die Gerätekontur hinausragen, werden Wendigkeit und Mobilität des Gerätes 1 nicht negativ beeinträchtigt.

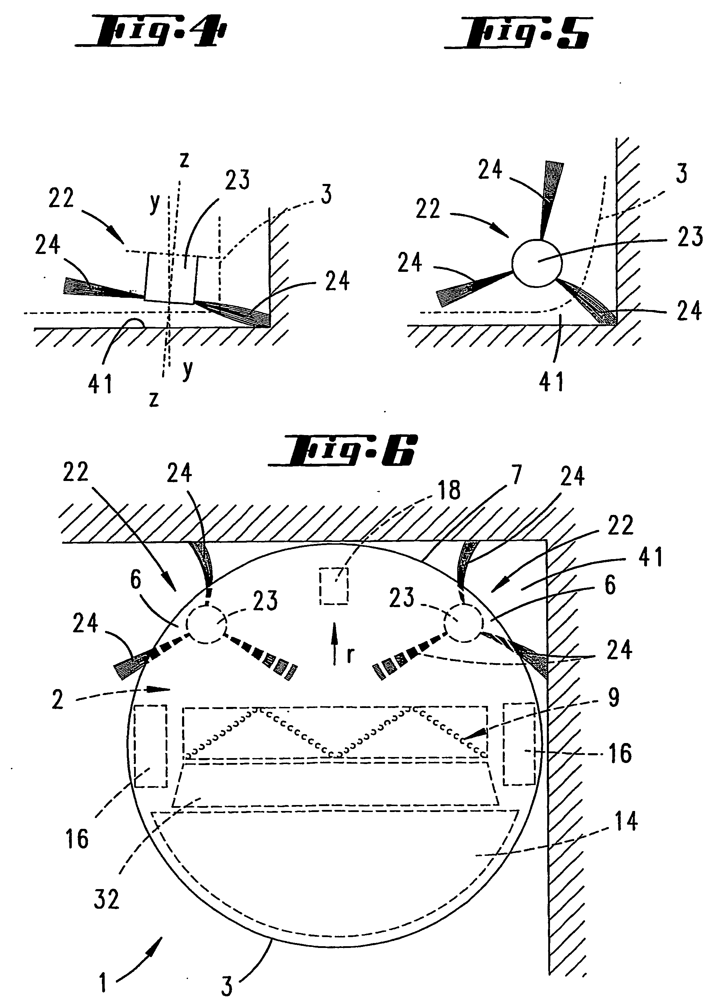

Die, die Horizontalbürste 9 beliefernden Kehrbürsten 22 sind orientiert an einer Vertikalachse y. Um eine verbesserte Reinigungswirkung zu erzielen ist die Drehachse z einer jeden Kehrbürste 22 gegenüber der Vertikalachse y in Verfahrrichtung r geneigt, so bspw. um einen Winkel von 5º bis 15º (vgl. Fig. 4).

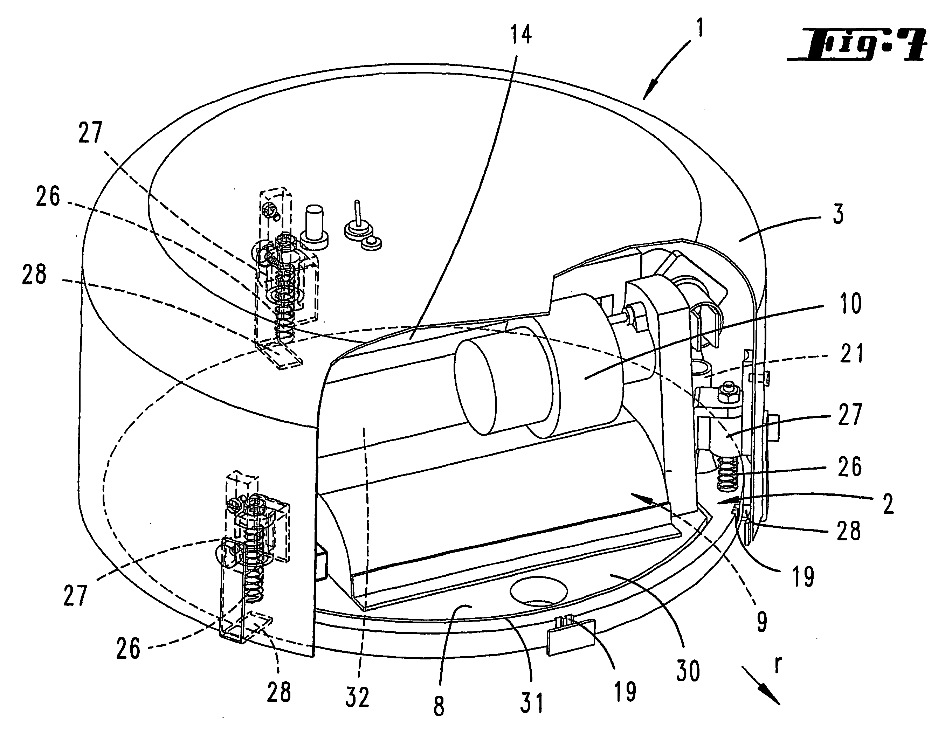

Aufgrund der, bezogen auf die Geräteaußenkontur gewählten Überlänge der Borstenbüschel 24 ist eine Anpassung an Ecken und Kanten durch Biegen und Strecken der Borstenbüschel 24 erreichbar (vgl. Figuren 4 und 5).

Der Antrieb der Kehrbürsten 22 erfolgt indirekt über den Elektromotor 10. So treibt letzterer, wie erwähnt, die um die Horizontalachse x drehende Bürste 9 an. Über letztere werden mittels Transmissions-Riemen 25 die Kehrbürsten 22 angetrieben, wobei ein Übersetzungsverhältnis von Bürste 9 zu Kehrbürsten 22 von bspw. 3 bis 15 zu 1 gewählt ist.

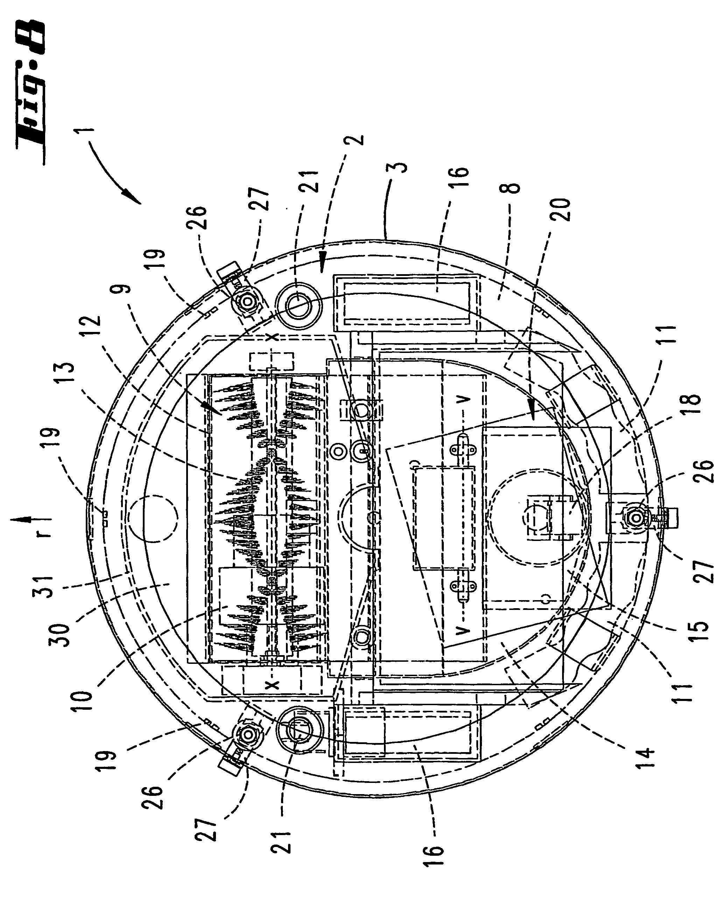

Wie in Fig. 6 schematisch dargestellt kann die zuvor beschriebene Ausführung mit einer um eine Horizontalachse x drehenden Bürste 9 und zwei orientiert an einer Vertikalachse y drehenden Kehrbürsten 22 auch bei einem Aufsammelgerät 1 mit insgesamt kreisrundem Grundriss Anwendung finden.

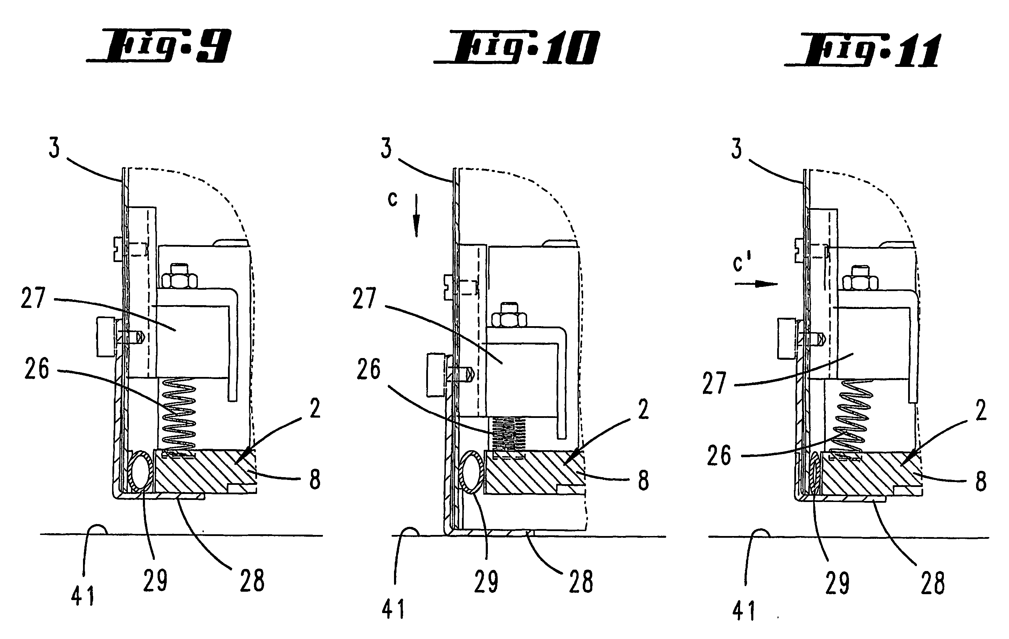

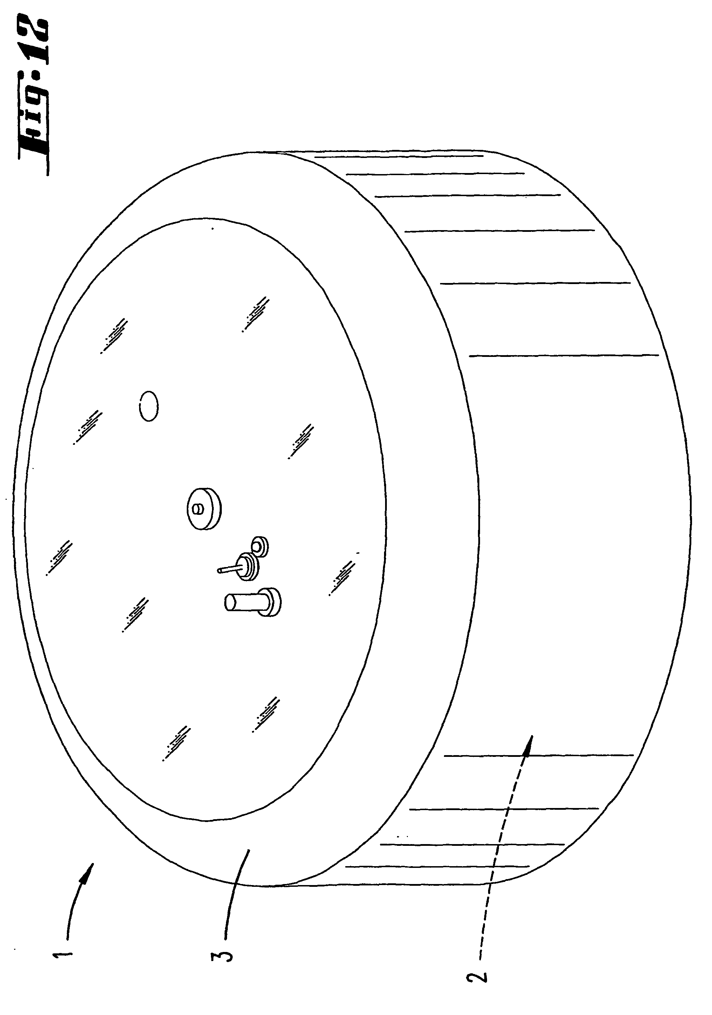

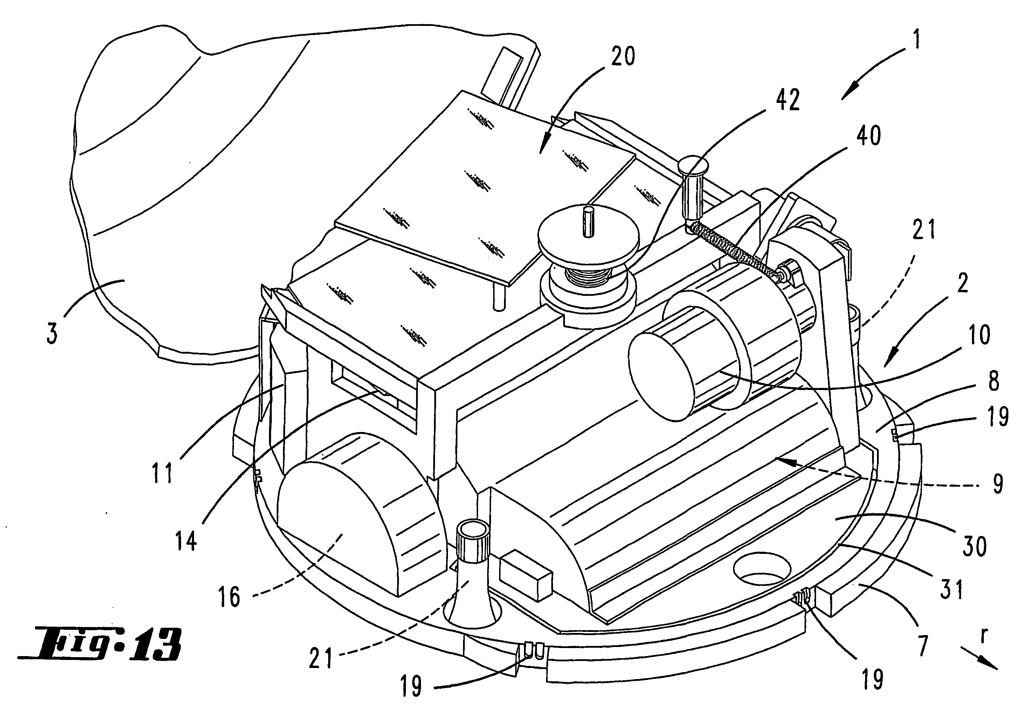

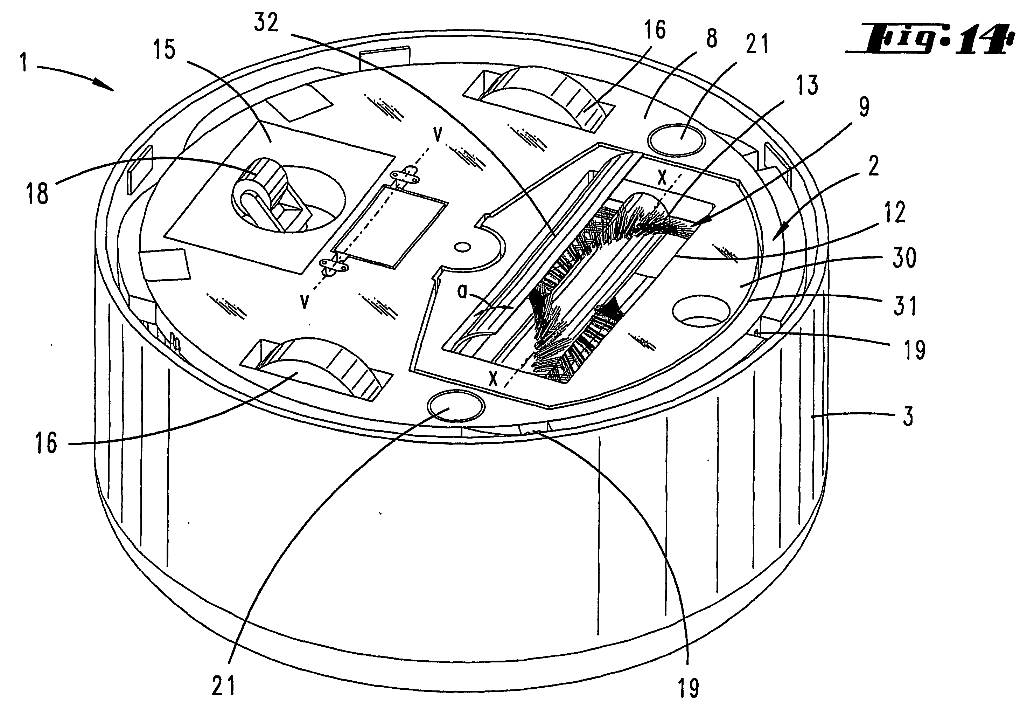

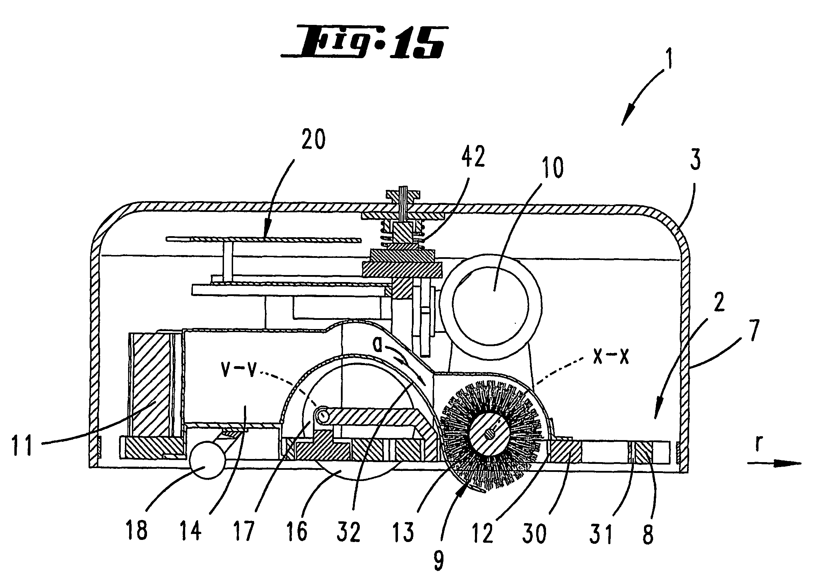

Wie erwähnt, wird ein Hindernis durch Anstoßen und hieraus erfolgender Sensorerfassung erkannt Hierzu ist eine leichte Verlagerung - Neigung - der Abdeckhaube 3 erwünscht Um die Abdeckhaube 3 in ihrer Ausgangsruhelage zurückzuversetzen und dort zu halten ist eine federnde Halterung der Abdeckhaube 3 an dem Chassis 2 vorgesehen. Gemäß der zuvor beschriebenen ersten Ausführungsform kann diese Abfederung der Abdeckhaube 3 zentral im oberen Bereich vorgesehen sein (Zentralfeder 42). Eine weitere erfindungsgemäße Lösung ist in einer weiteren Ausführungsform in den Figuren 7 bis 11 dargestellt. Es ist zu erkennen, dass hierbei die Abdeckhaube 3 über drei dezentral angeordnete Federn 26 an dem Chassis 2 abgestützt ist, wobei diese drei Federn 26 umfangsgleich verteilt sind.

Die Abdeckhaube 3 weist, zugeordnet jeder Feder 26, innenwandig einen, ein Federende aufnehmenden Lagerbock 27 auf. Die sich vertikal erstreckende Feder 26 stützt sich mit ihrem anderen Ende oberseitig auf dem Geräteboden 8 ab.

Die Abdeckhaube 3 stützt sich demnach über die Federn 26 auf dem Geräteboden 8 ab, wobei eine Anschlagbegrenzung der Abdeckhaube 3 nach vertikal oben durch einen, den Geräteboden 8 unterfangenden Radialausleger 28 der Abdeckhaube 3 anschlagbegrenzt ist (vgl. Fig. 9).

Die Lagerböcke 27 sind höhenmäßig so angeordnet, dass bei einer vertikalen Beaufschlagung der Abdeckhaube 3 diese sich entgegen der Federkraft absenkt (Pfeil c) und sich mit ihrem umlaufenden Rand auf dem Fußboden 41 abstützt, wobei die Unterseite der Lagerböcke 27 noch mit Abstand zur Oberseite des Gerätebodens 8 verharren. Demnach werden auf die Abdeckhaube 3 einwirkende Vertikalkräfte nicht in das Chassis 2 eingeleitet sondern vielmehr über die Abdeckhaube 3 in den Fußboden 41 geleitet (vgl. Fig. 10).

Auch das seitliche Verschwenken (Pfeil c') der Abdeckhaube 3 bei einer Kollision mit einem Hindernis ist durch die gewählte Anordnung der Federn 26 erreichbar. Zur Verhinderung eines Nachschwingens und somit eines mehrfachen Auslösens eines Sensorsignales kann zwischen der Abdeckhaube 3 und dem umlaufenden Rand des Gerätebodens 8 ein Schwingungsdämpfer 29 angeordnet sein.

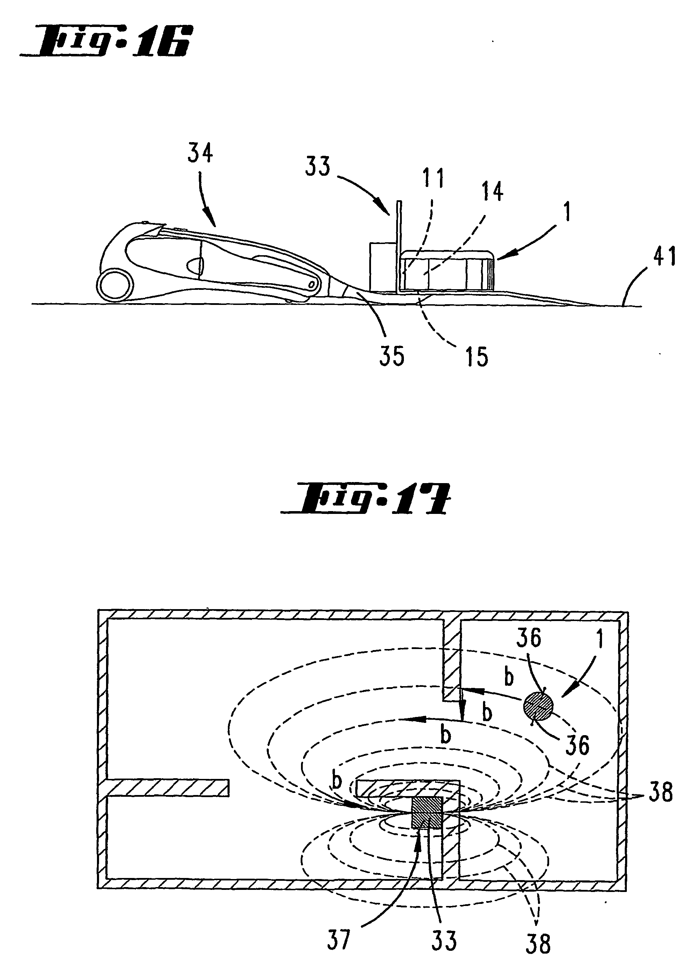

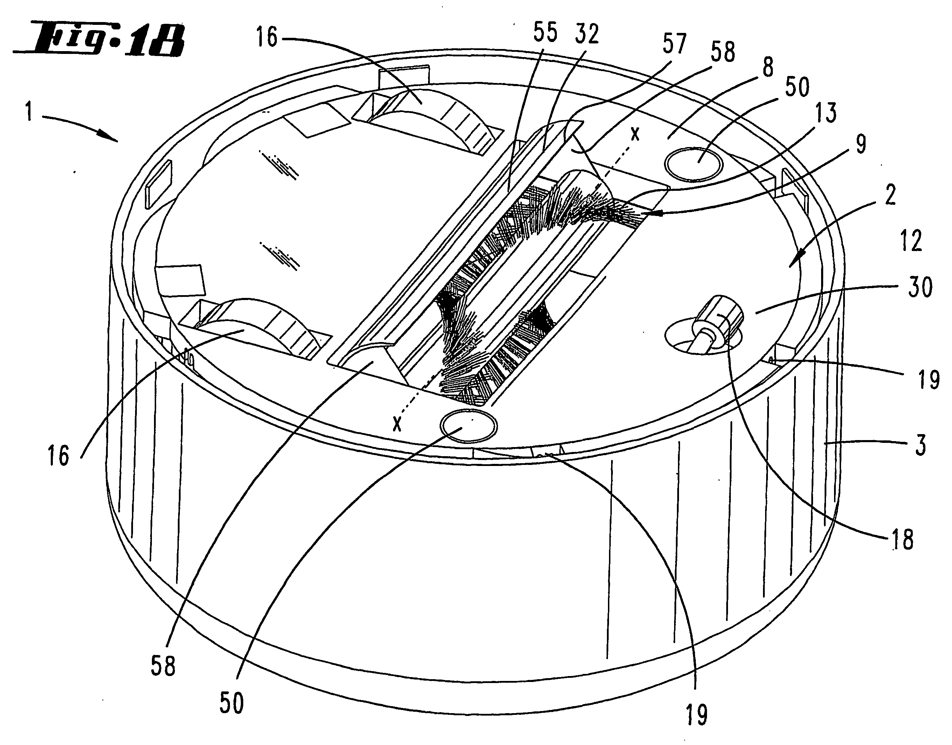

Auch die in den Figuren 12 bis 15 dargestellte Ausführungsform eines Aufsammelgerätes 1 weist einen kreisrunden Grundriss auf. Um eine Anpassung an unterschiedliche Fußbodenbeschaffenheiten, so bspw. im Übergang von Hartboden auf Teppichboden, zu gewährleisten, ist ein, die Achslager der um die Horizontalachse x drehbaren Bürste 9 tragendes Bodenteil 30 um eine horizontal ausgerichtete Achse v schwenkbar an dem Chassis 2 angeordnet Der Geräteboden 8 weist eine der Kontur des Bodenteiles 30 angepasste Ausnehmung 31 auf.

Zufolge dieser Ausgestaltung ist stets eine optimale Höhenanpassung des wesentlichen Bereiches, nämlich des Bürstenbereiches erreichbar. Eine, einerends mit dem Chassis 2 verankerte und andemends über einen Halter des Elektromotors 10 mit dem beweglichen Bodenteil 30 verbundene Rückstellfeder 40 dient zur Ausrichtung des Bodenteiles 30 in einer Grundstellung

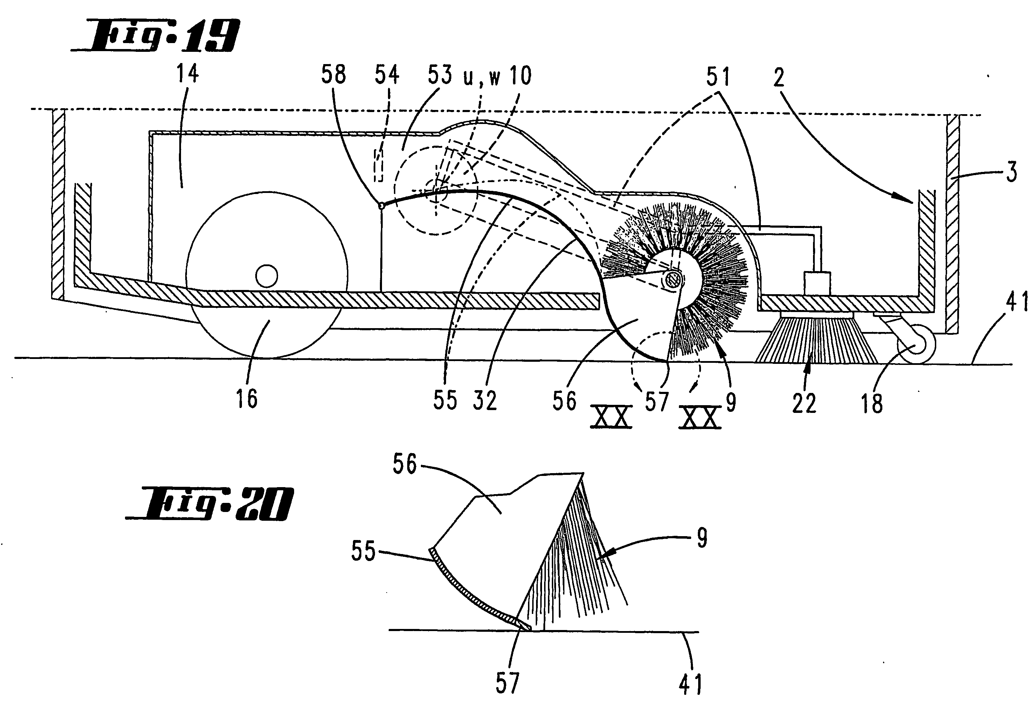

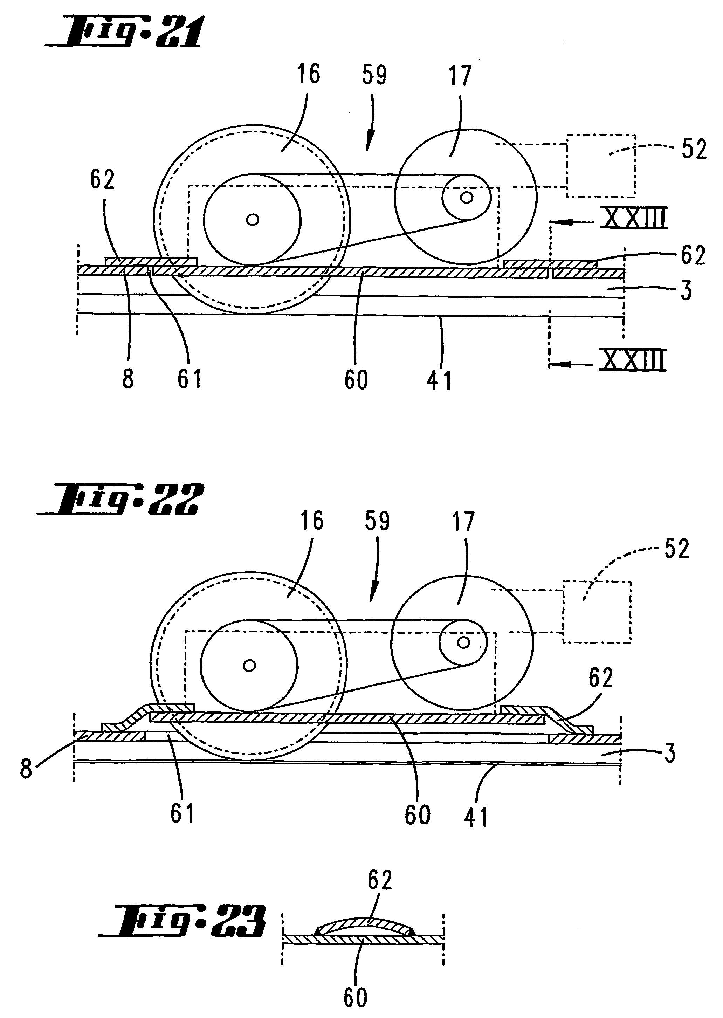

Des Weiteren ist, wie aus der Schnittdarstellung in Fig. 15 zu erkennen, eine Rampe 32 vorgesehen, welche kehrblechartig in Verfahrrichtung r hinter der Bürste 9 angeordnet ist und dem gezielten Auswerfen des aufgekehrten Bodenstaubes in den Staubsammelbehälter 14 dient. Diese Rampe 32 wächst zu der Bürste 9 hin aus dem Bodenteil 30 aus und gleitet im Betrieb mit ihrer freien Stirnkante auf dem zu pflegenden Fußboden.

Die Rampe 32 ist sowohl zu dem Bodenteil 30 als auch zu der Bürste 9 relativ höhenmäßig beweglich (Pfeile a), wodurch eine unabhängige Höhenanpassung der Rampe 32 gegeben ist, wobei weiter die Rampe 32 den Staubsammelbehälter 14 nach vorne abschließt

Wie weiter aus der Unteransicht in Fig. 14 zu erkennen, ist bei dieser Ausführungsform eine Stützrolle 18 im hinteren Bereich vorgesehen.

Das höhenverlagerbare Bodenteil 30 sowie die Rampe 32 sind darüber hinaus auch in Verbindung mit in den Eckbereichen 6 angeordneten Kehrbürsten 22 verwendbar.

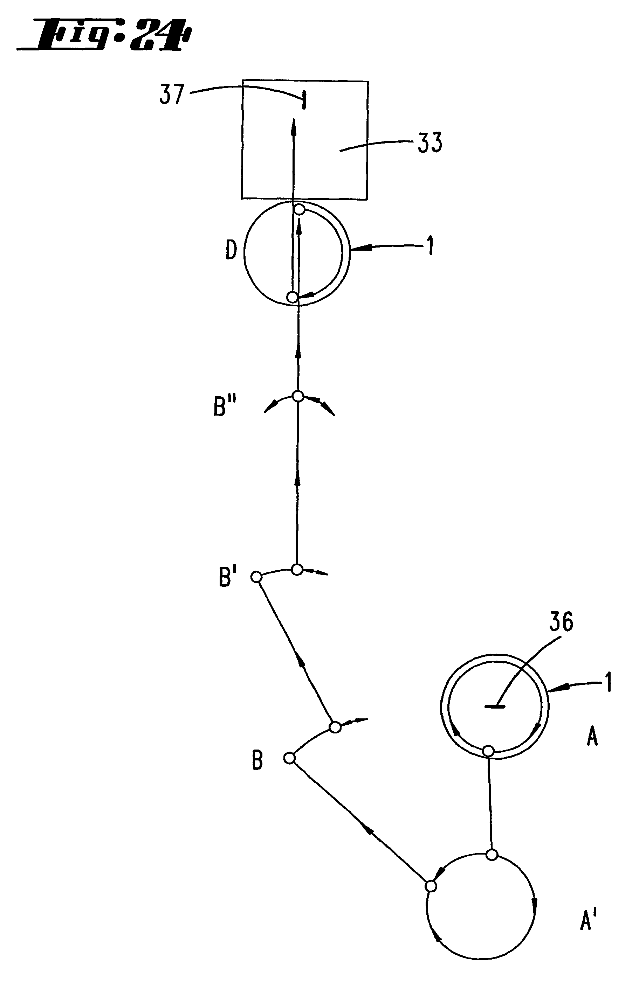

Das autonom arbeitende Aufsammelgerät 1 ist nach dem Sender-/ Empfänger-Prinzip mit einer Basisstation 33 gekoppelt, welch letztere sowohl als Parkplatz und Ladestation für das Gerät 1 als auch als Entleerungsstation dient. Hierzu weist die Basisstation 33 einen gesondert verwendbaren Staubsauger 34 auf (vgl. Fig. 16). Hierbei handelt es sich um einen üblichen Haushaltsstaubsauger, welcher über einen Adapter (35) mit der Basisstation 33 verbunden ist. Das die Basisstation 33 aufsuchende Aufsammelgerät 1 löst in der Parkstellung einen Kontakt aus, wonach der bspw. in einem Stand-By-Betrieb verharrende Staubsauger 34 den in dem Staubsammelbehälter 14 aufbewahrten Staub absaugt. Gleichzeitig erfolgt ein Aufladen des Energieträgers, welcher bspw. in Form eines Akkumulator-Paketes 11 ausgebildet ist. Diesbezüglich sind auch Brennstoffzellen denkbar.

Zum selbsttätigen Auffinden der Basisstation 33 weist das Aufsammelgerät 1 ein oder zwei Empfangerantennen 36 auf, mit deren Hilfe die Ausrichtung der Feldlinien eines durch einen in der Basisstation 33 angeordneten Senders erzeugten elektromagnetischen Feldes ermittelt werden. Die mit Hilfe eines Schwingkreises erzeugten und durch eine Senderantenne 37 gesendeten Wellen 38 durchdringen die meisten Hindernisse und sind somit weitestgehend sicher vor Abschattung.

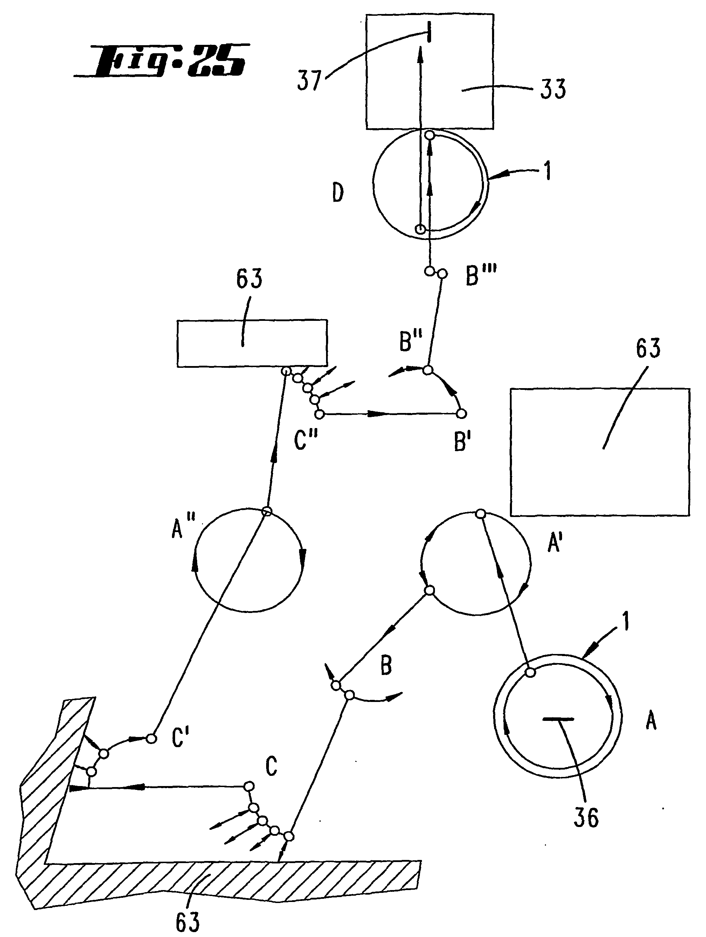

Das Funktionsprinzip ist schematisch in Fig. 17 dargestellt. Das Aufsammelgerät 1 orientiert sich beim Zurückfahren zur Basisstation 33 an den Feldlinien, in dem es entweder den Feldlinien folgt und hierbei in Richtung des stärksten Signals fährt oder senkrecht zu den Feldlinien fährt (Pfeile b). Darüber hinaus ist auch eine gemischte Strategie zum Auffinden der Basisstation 33 einsetzbar. Trifft das Aufsammelgerät 1 auf ein Hindernis, greift eine sensorunterstützte Verhaltensstrategie, die das Umfahren des Hindernisses ermöglicht, wonach der Weg zur Basisstation 33 fortgesetzt wird.

Wie in Fig. 18 dargestellt, kann bei einem runden Grundriss des Aufsammelgeräts 1 die Stützrolle 18 im in Verfahrrichtung betrachteten vorderen Bereich angeordnet sein, während die Verfahrräder 16 dem hinteren Teil des Aufsammelgeräts 1 zugeordnet sind. Die Bürste 9 erstreckt sich hierbei etwa mittig des Gerätebodens 8 quer zur Verfahrrichtung.

Die Abgrunderkennung ist bei dieser Ausgestaltung beispielhaft durch Infrarot-Sensoren 50 realisiert, wobei eine Anordnung derselben in Verfahrrichtung vor der Bürste 9 gewählt ist Die der Hinderniserkennung dienenden Sensoren 19 sind in dem dargestellten Ausführungsbeispiel gleichfalls Infrarot-Sensoren. Ein hierüber erkanntes Hindernis führt über eine Auswertung zu einem Abbremsen des Aufsammelgeräts 1, womit die Wucht beim Anstoß reduziert bzw. darüber hinaus der Stoß vermieden wird. Über einen Mikroprozessor kann das ausgewertete Ergebnis dazu genutzt werden, dass bei einer Hinderniserkennung eine geringe Geschwindigkeit und bei Nichtvorhandensein eines Hindernisses eine hohe Geschwindigkeit des Aufsammelgeräts 1 gewählt wird.

Fig. 19 zeigt einen schematischen Schnitt durch ein Aufsammelgerät 1 in einer weiteren Ausführungsform mit einer Stützrofle-Verfahrräder-Anordnung gemäß der Ausführungsform in Fig. 18. Die Bürste 9 ist an einer Wippe 51 höhenveränderbar gelagert, wozu die Wippe 51 in dem Chassis 2 um eine Drehachse w kippbar ist. Diese Wippen-Drehachse w fällt zusammen mit der horizontal angeordneten Achse u des die Bürste 9 antreibenden Elektromotors 10, wobei der Elektromotor 10 in Verfahrrichtung r hinter der Bürste 9 angeordnet ist

Weiter trägt die Wippe 51 in dem dargestellten Ausführungsbeispiel auch eine - hier lediglich schematisch dargestellte - Kehrbürste 22.

Zufolge dieser Ausgestaltung ist eine Selbstentlastung bei erhöhter Reibung erzielt. Liegt ein erhöhter Widerstand an der Bürste 9 vor, so wird diese und gegebenenfalls auch vorhandene Kehrbürsten 22 entgegen der Schwerkraft angehoben. So ist bei sämtlichen Belastungszuständen des Geräts der Elektromotor 10 samt Kraftübertragungseinrichtung vor Zerstörung geschützt. Darüber hinaus wird die Leistung des Elektromotors 10 konstant gehalten.

Wie in den Darstellungen der Fig. 21 und 22 schematisch angedeutet, besteht weiter die Möglichkeit, den Motorstrom des die Bürste 9 antreibenden Elektromotors zur Auswertung heranzuziehen. Über eine Auswerteelektronik 52 wird in Abhängigkeit des Motorstroms eine Änderung der Verfahrroutine des Bodenstaub-Aufsammelgeräts 1 erreicht, so bspw. bei unzulässig erhöhtem Motorstrom ein Zurückfahren des Aufsammelgeräts 1. Ein derart unzulässig erhöhter Motorstrom kann bspw. bei Einziehen von Fransen oder eines Kabels in die Bürste 9 vorliegen. Darüber hinaus bewirkt die Auswerteelektronik 52 beginnend mit einem Schwellwert des erfassten Motorstroms die Auslösung eines Zeitfensters, innerhalb dessen eine weitere Erhöhung des Motorstroms als Auslöseereignis für ein Zurückfahren des Aufsammelgeräts 1 herangezogen wird.

Wie weiter in Fig. 19 zu erkennen, ist in dem zu dem Staubsammelbehälter 14 führenden Staubzuführkanal 53 eine Staubdurchsatzkontrolle 54 in Form einer Infrarot-Lichtschranke angeordnet, zur Ermittlung der von der Bürste 9 in Richtung auf den Staubsammelbehälter 14 abgeworfenen Staubmenge innerhalb eines vorbestimmten Zeitfensters. Anhand des ermittelten Staubdurchsatzes wird gegebenenfalls die Verfahrstrategie des Aufsammelgeräts 1 angepasst. So wird bei einem ermittelten hohen Staubdurchsatz ein wiederholtes Abfahren der den erhöhten Staubdurchsatz erbrachten Fahrstrecke bewirkt

Die an die Wurfrichtung orientiert angeordnete Rampe 32 ist in Wurfrichtung ausweichbar angeordnet, wobei die Rampe um die Bürstenachse x verschwenkbar ist Die Rampe 32 ist gegen Federkraft ausweichbar, wozu die Rampe 32 als Kunststofffolie ausgebildet ist, welch letztere ein Bandelement 55 ausformt. Im vorderen, d. h. der Bürste 9 zugeordneten Bereich ist das Bandelement 55 seitlich an Gleitschuhen 56 befestigt, die drehbar um die Bürstenwelle x gelagert sind. Das folienartige Bandelement 55 wird somit im vorderen Bereich der Rampe 32 entlang einer definierten Bahn geführt, wodurch eine Kollision mit der Bürste 9 ausgeschlossen ist. Die vordere freie, auf dem zu reinigenden Boden aufliegende Randkante 57 ist verschleißresistent in Form einer Metall- oder Kunstkante ausgeformt.

Durch die Vorspannkraft drückt die Rampe 32 die Randkante 57 stets an den zu reinigenden Boden. Trifft die Rampe 32 auf ein Hindernis, so weicht diese aus, indem sie sich um die Bürstenachse x nach oben dreht, wobei das Bandelement 55 bedingt durch die endseitige Befestigung des Bandelements 55 an einer Wandung des Staubsammelbehältnisses 17 einfedert. Der Befestigungspunkt des Bandelementes im Bereich des Sammelraumes 14 ist mit dem Bezugszeichen 58 versehen.

Die Rampe 32 passt sich an verschiedene Bodenhöhen an, wobei die Federkraft der Rampe 32 so gewählt ist, dass sich das Aufsammelgerät 1 nicht festfahren kann.

Um auf die Abdeckhaube 3 einwirkende Vertikalkräfte nicht in das Chassis 2 einzuleiten, sondern vielmehr über die Abdeckhaube 3 in den Fußboden 41 zu leiten, ist in einer weiteren Ausführungsform gemäß den Fig. 21 und 22 eine federnde Aufhängung des die Verfahrräder 16 und die zugeordneten Elektromotoren 17 beinhaltenden Fahrwerks 59 vorgesehen. Hierzu sind die Verfahrräder 16 und der Elektromotor 17 auf einer von dem Geräteboden 8 gesonderten Fahrwerk-Montageplatte 60 angeordnet, welche Montageplatte 60 sich in einer unbelasteten Grundstellung gemäß Fig. 21 in einem an den Grundriss der Montageplatte 60 angepassten fensterartigen Ausbruch 61 des Gerätebodens 8 in der Ebene des Gerätebodens 8 erstreckt.

Die das Fahrwerk 59 tragende Montageplatte 60 ist relativ zu dem Chassis 2 und der Abdeckhaube 3 federnd aufgehängt. Diese federnde Aufhängung ist durch die Montageplatte 60 an den Geräteboden 8 anbindende Federbänder 62 realisiert, welche gemäß der Darstellung in Fig. 23 im Querschnitt eine sphärische Auswölbung aufweisen. Demzufolge sind die Federbänder 62 als Knackfedern geformt, wobei jedes Federband 62 bevorzugt aus einem profilierten - bombierten - Metall- bzw. Stahlblech geschnitten ist.

Die Abdeckhaube 3 ist in diesem Ausführungsbeispiel zumindest in vertikaler Richtung starr mit dem Chassis 2 verbunden. Eine vertikale Beaufschlagung der Abdeckhaube 3 bewirkt bei Überschreiten eines Schwellwertes über das Chasssis 2 und den Geräteboden 8 das Nachgeben der Federbänder 62, was eine Verringerung des Abstandes der Abdeckhaube 3 zu dem Boden 41 zur Folge hat. Durch die Knackfederausbildung ergibt sich bei Überschreiten des Schwellwertes ein schlagartiges Einknicken des Fahrwerks 59, wonach die Abdeckhaube 3 sich zur Einleitung der vertikal einwirkenden Kräfte auf dem Fußboden 41 abstützt (vergl. Fig. 22).

Wird der Schwellwert der vertikal eingeleiteten Kräfte unterschritten, so nimmt das Fahrwerk 59 aufgrund der Federvorspannung der Federbänder 62 die Ursprungsstellung gemäß Fig. 21 ein, unter gleichzeitigem Anheben der Abdeckhaube 3 und des Chassis 2.

Anstelle der Federbänder 62 können auch zwischen der Montageplatte 60 und dem Geräteboden 8 wirkende Druckfedern angeordnet sein, deren Federcharakteristik so ausgelegt ist, dass diese erst bei Überschreiten eines Schwellwertes ansprechen.

Die Verhaltensstrategie zum Befahren einer unbekannten Fläche beruht auf dem Prinzip des Pseudozufallverhaltens. So ist für jeden der bevorzugt drei Hindemissensoren 19 im Frontbereich ein optimierter Drehwinkel berechnet Dieser besteht aus einem fixen Drehwinkelanteil und einem Drehwinkelbereich um den fixen Drehwinkel herum, aus dem im Betrieb ein Zufallswinkel berechnet wird. Das Zurückfinden zur Basisstation 33 erfolgt mittels eines elektromagnetischen Felds, wobei in dem dargestellten Ausführungsbeispiel die Empfängerantenne 36 auf dem Aufsammelgerät 1 quer und die Senderantenne 37 an der Basisstation 33 längs angeordnet ist.

Fig. 24 zeigt schematisch das Rückfahrverhalten des Aufsammelgeräts 1. Zunächst erfolgt am Punkt A eine Orientierung am Feld mittels Ausmessen der Maxima und Minima durch 360°-Drehung des Aufsammelgeräts 1. Die erfassten Maxima werden gespeichert, wonach eine Entscheidung über eine Messbereichsumschaltung erfolgt. Anschließend richtet sich das Aufsammelgerät 1 an einem der beiden Minima aus und fährt vorwärts eine vorbestimmte Strecke von bspw. 40 cm bis zum Punkt A', wo eine erneute Messung durch 360°-Drehung durchgeführt wird.

Sind die bei Punkt A' ermittelten Maximawerte kleiner als die vor dem Verfahren an Punkt A gemessenen Maximawerte, so ist die richtige Richtung eingeschlagen, wonach die Fahrt fortgesetzt wird. Sind jedoch die nach dem ersten Verfahren bei Punkt A' ermittelten Maximawerte größer als die Maximawerte am Ursprungspunkt A so wurde die falsche Richtung gewählt. Als Reaktion hierauf erfolgt eine Drehung des Aufsammelgeräts 1 entgegen der zuvor gewählten Richtung. Diese Situation ist in Fig. 24 dargestellt.

Das Aufsammelgerät 1 fährt stets geradeaus in Richtung des Minimums, wobei die Länge der Fahrstrecke entsprechend des Messbereichs ist. Dies bedeutet, dass je näher das Aufsammelgerät 1 an der Basisstation 33 ist und somit das Signal stärker wird, desto kürzer wird die Fahrstrecke zwischen zwei Ausrichtungspunkten B.

Nach jeder Fahrtstrecke erfolgt eine Feinausrichtung des Aufsammelgeräts 1 am Minimum durch Drehen des Aufsammelgeräts 1 links und rechts der Fahrtrichtung, dies auch gegebenenfalls bei gleichzeitiger Vorwärtsfahrt. Durch Ermitteln des Minimums wird die weitere Fahrtrichtung bestimmt. Bei Überschreiten eines Grenzwertes durch einen Messwert erfolgt das Umschalten des Messbereiches. Diese Feinausrichtung (siehe Punkte B, B' und B" in Fig. 24) wird wiederholt, bis sich das Aufsammelgerät 1 unmittelbar vor der Basisstation 33 befindet, wonach das Aufsammelgerät 1 eine Drehung um 180° vollzieht und zum Andocken an der Basisstation 33 rückwärts fährt bis ein Endschalter oder ein Kontakt zu einem Ladestecker betätigt wird. In der dann erreichten Parkstellung wird das Aufsammelgerät 1 geladen und gegebenenfalls durch einen Staubsauger 34 entleert.

Die Basisstation 33 kann darüber hinaus auch als Raumluftreinigungsgerät mit einer Andockkupplung für das Aufsammelgerät 1 ausgebildet sein. Weiter besteht auch die Möglichkeit, dass die Basisstation 33 weitere Andockkupplungen für weitere Geräte, wie bspw. Handakku-Staubsauger, im Sinne einer Ladestation aufweist.

Die Fig. 25 zeigt das angepasste Verhalten des Aufsammelgeräts 1 im Zuge der Rückfahrt zur Basisstation 33 bei Hinderniskontakt. Ein Anstoßen oder auch eine optische Hinderniserkennung über die Sensoren 19 führt zum Modus Hindernisverhalten (siehe Punkte C, C' und C" in Fig. 25). Trifft das Aufsammelgerät 1 auf ein Hindernis 63, erfolgt zunächst ein Zurückverfahren entgegen der ursprünglichen Verfahrrichtung, woraufhin ein Verschwenken um einen gewählten kleinen Winkel weg vom Hindernis 63 erfolgt, wobei dieser gewählte Winkel auch ein Zufallswinkel sein kann. Anschließend erfolgt wieder ein Vorwärtsfahren und Wiederholung der vorgenannten Schritte bis kein Hinderniskontakt mehr vorliegt. Die vollzogenen Drehwinkel zum Umfahren des Hindernisses 63 werden gespeichert und summiert, dies unter gleichzeitigem Zählen der Stoßereignisse.

Nach Überwinden des Hindernisses 63 fährt das Aufsammelgerät 1 im Normalmodus über eine vorgegebene Strecke von bspw. 40 cm oder bis zu einem erneuten Hinderniskontakt. Falls die Anzahl der gezählten Stöße einen Grenzwert überschreitet bzw. der Gesamtdrehwinkel einen Grenzwert übersteigt, bricht das Aufsammelgerät 1 durch Drehung über einen zufälligen Winkel aus dem angepassten Verhalten bei Hinderniskontakt aus und beginnt mit der Neuorientierung am Feld. Diese Reaktion ist in Fig. 25 dargestellt. Die Anzahl der Stöße bzw. der Gesamtdrehwinkel an den Punkten C und C' im Bereich einer Raumecke überschreitet einen Grenzwert, so dass aus C' heraus aus dem angepassten Verhalten bei Hinderniskontakt ausgebrochen wird und bei Punkt A" eine Neuorientierung am Feld erfolgt.

Bei Punkt C" hingegen wird das Hindernis 63 erfolgreich umfahren, wonach das Aufsammelgerät 1 zunächst eine vorgegebene Strecke bis zum Punkt B' fährt. Hier dreht sich das Aufsammelgerät 1 um den zum Umfahren des Hindernisses 63 erforderlichen Winkelbetrag zurück, wonach der Zähler für die Drehwinkel und die Stoßereignisse auf Null gesetzt werden. Vom Punkt B' aus erfolgt das Verfahren zur Basisstation 33 in dem dargestellten Ausführungsbeispiel hindernisfrei und demnach entsprechend der Ausführung bezüglich der Darstellung in Fig. 24.

Gegenstand der Erfindung, der allein oder in Kombination mit einem der vorbeschriebenen Merkmale Bedeutung hat, ist auch ein Bodenstaub-Aufsammelgerät, wobei die Abdeckhaube 3 an den weiteren Geräteteilen mittels dezentral angeordneter Federn 26 abgestützt ist, bei welchem drei Federn 26 vorgesehen sind.

Gegenstand der Erfindung, der allein oder in Kombination mit einem der vorbeschriebenen Merkmale Bedeutung hat, ist auch ein Bodenstaub-Aufsammelgerät, bei welchem die Bürste 9 an einer Wippe 51 höhenveränderbar gelagert ist.

Gegenstand der Erfindung, der allein oder in Kombination mit einem der vorbeschriebenen Merkmale Bedeutung hat, ist auch ein Bodenstaub-Aufsammelgerät, bei welchem an der Wippe 51 auch die Kehrbürsten 22 höhenveränderbar angeordnet sind.

Gegenstand der Erfindung, der allein oder in Kombination mit einem der vorbeschriebenen Merkmale Bedeutung hat, ist auch ein Bodenstaub-Aufsammelgerät, bei welchem die Achse u des die Bürste 9 antreibenden Elektromotors 10 horizontal angeordnet ist und mit einer Drehachse w der Wippe 51 zusammenfällt.

Gegenstand der Erfindung, der allein oder in Kombination mit einem der vorbeschriebenen Merkmale Bedeutung hat, ist auch ein Bodenstaub-Aufsammelgerät, bei welchem zur Abgrund- und/ oder Hinderniserkennung eine Infrarot-Lichtschranke dient.

Gegenstand der Erfindung, der allein oder in Kombination mit einem der vorbeschriebenen Merkmale Bedeutung hat, ist auch ein Bodenstaub-Aufsammelgerät, bei welchem Bürstenabschnitte der Kehrbürsten 22 über eine durch die Abdeckhaube 3 vorgegebene Randkontur des Gerätes 1 hinausragen.

Gegenstand der Erfindung, der allein oder in Kombination mit einem der vorbeschriebenen Merkmale Bedeutung hat, ist auch ein Bodenstaub-Aufsammelgerät, bei welchem die Bürste 9 den Bodenstaub in einen gerätefesten Staubsammelbehälter 14 wirft.

Gegenstand der Erfindung, der allein oder in Kombination mit einem der vorbeschriebenen Merkmale Bedeutung hat, ist auch ein Bodenstaub-Aufsammelgerät, bei welchem die Bürste 9 und die Kehrbürsten 22 gemeinsam mittels eines Elektromotors 10 angetrieben werden.

Gegenstand der Erfindung, der allein oder in Kombination mit einem der vorbeschriebenen Merkmale Bedeutung hat, ist auch ein Bodenstaub-Aufsammelgerät, bei welchem der Elektromotor 10 die Bürste 9 antreibt und das die Kehrbürsten 22 mittels durch die Bürste 9 angetriebener Transmissions-Riemen 25 angetrieben werden.

Gegenstand der Erfindung, der allein oder in Kombination mit einem der vorbeschriebenen Merkmale Bedeutung hat, ist auch ein Bodenstaub-Aufsammelgerät, bei welchem die Kehrbürsten 22 mit einem Verhältnis zu der Bürste 9 unterschiedlicher Drehzahl umlaufen.

Gegenstand der Erfindung, der allein oder in Kombination mit einem der vorbeschriebenen Merkmale Bedeutung hat, ist auch ein Bodenstaub-Aufsammelgerät, bei welchem die Drehachse z einer Kehrbürste 22 in Verfahrrichtung r geneigt ist.

Gegenstand der Erfindung, der allein oder in Kombination mit einem der vorbeschriebenen Merkmale Bedeutung hat, ist auch ein Bodenstaub-Aufsammelgerät, bei welchem die drei Federn 26 umfangsgleich verteilt sind.

Gegenstand der Erfindung, der allein oder in Kombination mit einem der vorbeschriebenen Merkmale Bedeutung hat, ist auch ein Bodenstaub-Aufsammelgerät, bei welchem die Bürste 9 in einem, um eine horizontale Achse v beweglichen Bodenteil 30 aufgenommen ist

Gegenstand der Erfindung, der allein oder in Kombination mit einem der vorbeschriebenen Merkmale Bedeutung hat, ist auch ein Bodenstaub-Aufsammelgerät, bei welchem das Bodenteil 30 eine gegenüber dem Bodenteil 30 nach unten vorragende Rampe 32 aufweist,

Gegenstand der Erfindung, der allein oder in Kombination mit einem der vorbeschriebenen Merkmale Bedeutung hat, ist auch ein Bodenstaub-Aufsammelgerät, bei welchem die Rampe 32 zu der Bürste 9 hin aus dem Bodenteil 30 auswächst.

Gegenstand der Erfindung, der allein oder in Kombination mit einem der vorbeschriebenen Merkmale Bedeutung hat, ist auch ein Bodenstaub-Aufsammelgerät, bei welchem die Rampe 32 relativ zu dem Bodenteil 30 beweglich ist.

Gegenstand der Erfindung, der allein oder in Kombination mit einem der vorbeschriebenen Merkmale Bedeutung hat, ist auch ein Bodenstaub-Aufsammelgerät, bei welchem die Rampe 32 relativ zu der Bürste 9 beweglich ist.

Gegenstand der Erfindung, der allein oder in Kombination mit einem der vorbeschriebenen Merkmale Bedeutung hat, ist auch ein Bodenstaub-Aufsammelgerät, bei welchem die Rampe 32 in Verfahrrichtung r hinter der Bürste 9 angeordnet ist.

Gegenstand der Erfindung, der allein oder in Kombination mit einem der vorbeschriebenen Merkmale Bedeutung hat, ist auch ein Bodenstaub-Aufsammelgerät, bei welchem die Rampe 32 um eine Drehachse verschwenkbar ist.

Gegenstand der Erfindung, der allein oder in Kombination mit einem der vorbeschriebenen Merkmale Bedeutung hat, ist auch ein Bodenstaub-Aufsammelgerät, bei welchem die Drehachse der Rampe 32 mit einer Bürstenachse x zusammenfällt.

Gegenstand der Erfindung, der allein oder in Kombination mit einem der vorbeschriebenen Merkmale Bedeutung hat, ist auch ein Bodenstaub-Aufsammelgerät, bei welchem die Rampe 32 gegen Federkraft ausweichbar ist.

Gegenstand der Erfindung, der allein oder in Kombination mit einem der vorbeschriebenen Merkmale Bedeutung hat, ist auch ein Bodenstaub-Aufsammelgerät, bei welchem die Feder der Rampe 32 in die Rampenfläche integriert angeordnet ist.

Gegenstand der Erfindung, der allein oder in Kombination mit einem der vorbeschriebenen Merkmale Bedeutung hat, ist auch ein Bodenstaub-Aufsammelgerät, bei welchem das Bandelement 55 eine Kunststofffolie ist

Gegenstand der Erfindung, der allein oder in Kombination mit einem der vorbeschriebenen Merkmale Bedeutung hat, ist auch ein Bodenstaub-Aufsammelgerät, bei welchem der Motorstrom des die Bürste 9 antreibenden Elektromotors 10 zur Auswertung herangezogen ist und dass in Abhängigkeit des Motorstroms eine Änderung der Verfahrroutine des Bodenstaub-Aufsammelgeräts 1 erfolgt.

Gegenstand der Erfindung, der allein oder in Kombination mit einem der vorbeschriebenen Merkmale Bedeutung hat, ist auch ein Bodenstaub-Aufsammelgerät, bei welchem bei unzulässig erhöhtem Motorstrom ein Zurückfahren des Bodenstaub-Aufsammelgeräts 1 erfolgt.

Gegenstand der Erfindung, der allein oder in Kombination mit einem der vorbeschriebenen Merkmale Bedeutung hat, ist auch ein Bodenstaub-Aufsammelgerät bei welchem beginnend mit einem Schwellwert des erfassten Motorstroms ein Zeitfenster ausgelöst wird, innerhalb dessen eine weitere Erhöhung des Motorstroms als Auslöseereignis für ein Zurückfahren des Bodenstaub-Aufsammelgeräts 1 herangezogen wird.

Gegenstand der Erfindung, der allein oder in Kombination mit einem der vorbeschriebenen Merkmale Bedeutung hat, ist auch ein Verfahren zum Betreiben eines selbsttätig verfahrbaren Bodenstaub-Aufsammelgeräts 1, bei welchem ein einer jeweiligen Verfahrstrecke zugeordneter Staubanfall ausgewertet wird und bei welchem in Abhängigkeit von einem vorgegebenen Schwellwert die einem erhö h-ten Staubanfall zugeordnete Verfahrstrecke noch einmal abgefahren wird.

Gegenstand der Erfindung, der allein oder in Kombination mit einem der vorbeschriebenen Merkmale Bedeutung hat, ist auch ein Verfahren, bei welchem das Bodenstaub-Aufsammelgerät 1 über Stoß- und/ oder Abstandssensoren 19 verfügt und das Rückfahrverhalten auf einem vorprogrammierten Ablauf beruht, wobei darüber hinaus die Orientierung anhand eines von einer Basisstation 33 aufgebauten elektromagnetischen Feldes erfolgt, bei welchem zunächst eine Auswertung des elektromagnetischen Feldes durch das Bodenstaub-Aufsammelgerät 1, etwa durch eine 360°-Drehung des Bodenstaub-Aufsammelgeräts 1 erfolgt und sodann orientiert an den erfassten Minimawerten und ausgerichtet an einem der beiden Minimawerte ein Verfahren über eine vorbestimmte Strecke erfolgt, wonach die vorgenannten Schritte wiederholt werden.

Gegenstand der Erfindung, der allein oder in Kombination mit einem der vorbeschriebenen Merkmale Bedeutung hat, ist auch ein Verfahren, bei welchem im Falle einer wiederholten Messung durch eine 360°-Drehung eine größere maximale Feldstärke als bei der vorhergehenden Messroutine ermittelt wird, eine Drehung in Richtung des entgegengesetzten Minimums erfolgt.

Gegenstand der Erfindung, der allein oder in Kombination mit einem der vorbeschriebenen Merkmale Bedeutung hat, ist auch ein Verfahren, bei welchem in dem Fall, dass das Gerät 1 auf ein Hindernis trifft, zunächst ein Zurückverfahren erfolgt, daraufhin ein Verschwenken um einen gewählten Winkel oder einen Zufallswinkel in einer bestimmten Drehrichtung, wieder ein Vorwärtsfahren und Wiederholung der vorgenannten Schritte erfolgt, bis kein Hinderniskontakt mehr vorliegt

Gegenstand der Erfindung, der allein oder in Kombination mit einem der vorbeschriebenen Merkmale Bedeutung hat, ist auch ein Verfahren, bei welchem abhängig von einer vorbestimmten Anzahl von Hinderniskontakten nach dem Zurückfahren eine Drehung um einen Zufallswinkel vorgenommen wird.

Gegenstand der Erfindung, der allein oder in Kombination mit einem der vorbeschriebenen Merkmale Bedeutung hat, ist auch ein Verfahren, bei welchem abhängig von einer vorbestimmten Anzahl von Hinderniskontakten nach dem Zurückfahren eine Neuorientierung an dem elektromagnetischen Feld vorgenommen wird.

Gegenstand der Erfindung, der allein oder in Kombination mit einem der vorbeschriebenen Merkmale Bedeutung hat, ist auch ein Verfahren, bei welchem nach erfolgreichem Umfahren eines Hindernisses eine Rückdrehung um den zum Umfahren des Hindernisses erforderlichen Winkelbetrag durchgeführt wird.

Gegenstand der Erfindung, der allein oder in Kombination mit einem der vorbeschriebenen Merkmale Bedeutung hat, ist auch ein Verfahren, bei welchem mit zunehmender Annäherung an die Basisstation 33 die vorgenommene Verfahrstrekke kürzer gesetzt wird.

Gegenstand der Erfindung, der allein oder in Kombination mit einem der vorbeschriebenen Merkmale Bedeutung hat, ist auch ein Verfahren, bei welchem jedenfalls im Hinblick auf kleinere Richtungsänderungen auch während des Verfahrens eine Ausrichtung an die Feldstärke vorgenommen wird.

Alle offenbarten Merkmale sind (für sich) erfindungswesentlich. In der Offenbarung der Anmeldung wird hiermit auch der Offenbarungsinhalt der zugehörigen/ beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Selbsttätig verfahrbares Bodenstaub-Aufsammelgerät (1) mit einem elektromotorischen Antrieb, einem Staubsammelbehälter (14) und einer Abdeckhaube (3), wobei das Gerät (1) einen von einer Kreisform abweichenden Grundriss aufweist, der Grundriss sich aus einem Kreisformabschnitt (4) und einem, an einem Rechteck orientierten Formabschnitt (5) zusammensetzt und der Rechteckabschnitt (5) in Verfahrrichtung (r) vorne ist, **dadurch gekennzeichnet, dass** das Gerät (1) weiter zwei orientiert an einer vertikalen Achse (y) umlaufende Kehrbürsten (22) aufweist und dass die Kehrbürsten (22) vorderen Eckbereichen (6) des Rechteckabschnittes (5) des Grundrisses zugeordnet angeordnet sind.

2. Bodenstaub-Aufsammelgerät nach Anspruch 1, **dadurch gekennzeichnet, dass** das Gerät (1) eine um eine Horizontalachse (x) drehbare Bürste (9) aufweist und dass die Bürste (9) in dem Rechteckabschnitt (5) des Grundrisses angeordnet ist.

3. Bodenstaub-Aufsammelgerät (1), vorzugsweise selbsttätig verfahrbares Bodenstaub-Aufsammelgerät (1) mit einem elektromotorischen Antrieb, einem Staubsammelbehälter (14) und einer Abdeckhaube (3), sowie einer Bürste (9), die aufgrund ihrer Drehung die Staubteile in einer bestimmten Wurfrichtung in das Staubsammelbehältnis (14) befördert, nach Anspruch 1, wobei zugeordnet zu der Bürste (9) eine an die Wurfrichtung orientiert angeordnete Rampe (32) vorgesehen ist, **dadurch gekennzeichnet, dass** die Rampe (32) in Wurfrichtung ausweichbar angeordnet ist.

4. Selbsttätig verfahrbares Bodenstaub-Aufsammelgerät (1) mit einem elektromotorischen Antrieb, einem Staubsammelbehälter (14) und einer Abdeckhaube (3), nach Anspruch 1, **dadurch gekennzeichnet, dass** das Gerät (1) als Kehreinheit ausgebildet ist mit einer um eine Horizontalachse (x) drehbaren Bürste (9), die von zwei orientiert an einer Vertikalachse (y) drehenden Kehrbürsten (22) beliefert wird, wobei die Kehrbürsten (22) zueinander gegensinnige Drehrichtungen haben und in die Mitte des Gerätes in Richtung auf die im die Horizontalachse (x) drehende Bürste (9) transportieren.

5. Bodenstaub-Aufsammelgerät nach Anspruch 3, wobei die Abdeckhaube (3) an den weiteren Geräteteilen mittels dezentral angeordneter Federn (26) abgestützt ist, **dadurch gekennzeichnet, dass** drei Federn (26) vorgesehen sind.

6. Bodenstaub-Aufsammelgerät nach Anspruch 3, **gekennzeichnet durch** eine um eine Horizontalachse (x) laufende Bürste (9), die den aufgesammelten Staub in einen gerätefesten Staubsammelbehälter (14) wirft, wobei in einem Staubzuführkanal (53) zu dem Staubsammelbehälter (14) eine Staubdurchsatzkontrolle (54) vorgesehen ist.

7. Bodenstaub-Aufsammelgerät nach einem der Ansprüche 2 bis 6, **dadurch gekennzeichnet, dass** die Bürste (9) an einer Wippe (51) höhenveränderbar gelagert ist.

8. Bodenstaub-Aufsammelgerät nach Anspruch 7, **dadurch gekennzeichnet, dass** an der Wippe (51) auch die Kehrbürsten (22) höhenveränderbar angeordnet sind.

9. Bodenstaub-Aufsammelgerät nach einem der Ansprüche 7 oder 8, **dadurch gekennzeichnet, dass** die Achse (u) des die Bürste (9) antreibenden Elektromotors (10) horizontal angeordnet ist und mit einer Drehachse (w) der Wippe (51) zusammenfällt.

10. Bodenstaub-Aufsammelgerät nach Anspruch 3 oder nach einem der Ansprüche 1 bis 9, **dadurch gekennzeichnet, dass** zur Abgrund- und/oder Hinderniserkennung eine Infrarot-Lichtschranke dient.

11. Bodenstaub-Aufsammelgerät nach Anspruch 3 oder nach einem der Ansprüche 1 bis 10, mit einem, das Bodenstaub-Aufsammelgerät (1) zusammen mit der Abdeckhaube (3) vom Boden (41) distanzierenden Fahrwerk (59), wobei die Abdeckhaube (3) bei Erreichen einer vorgegebenen Belastung auf dem Boden (41) aufsitzt, **dadurch gekennzeichnet, dass** das Fahrwerk (59) relativ zu der Abdeckhaube (3) federnd aufgehängt ist derart, dass die Feder im Sinne einer Verringerung des Abstandes der Abdeckhaube (3) zu dem Boden (41) bei Überschreiten eines Schwellwertes anspricht.

12. Bodenstaub-Aufsammelgerät nach Anspruch 11, **dadurch gekennzeichnet, dass** bei Erreichen des Schwellwertes die Abdeckhaube (3) zufolge des sofortigen Nachgebens der Feder zur Auflage auf den Boden (41) kommt.

13. Bodenstaub-Aufsammelgerät nach einem der Ansprüche 1 bis 12, **dadurch gekennzeichnet, dass** Bürstenabschnitte der Kehrbürsten (22) über eine durch die Abdeckhaube (3) vorgegebene Randkontur des Gerätes (1) hinausragen.

14. Bodenstaub-Aufsammelgerät nach einem der Ansprüche 1 bis 13, **dadurch gekennzeichnet, dass** die Bürste (9) den Bodenstaub in einen gerätefesten Staubsammelbehälter (14) wirft.

15. Bodenstaub-Aufsammelgerät nach einem der Ansprüche 2 bis 14, **dadurch gekennzeichnet, dass** die Bürste (9) und die Kehrbürsten (22) gemeinsam mittels eines Elektromotors (10) angetrieben werden.

16. Bodenstaub-Aufsammelgerät nach Anspruch 15, **dadurch gekennzeichnet, dass** der Elektromotor (10) die Bürste (9) antreibt und das die Kehrbürsten (22) mittels durch die Bürste (9) angetriebener Transmissions-Riemen (25) angetrieben werden.

17. Bodenstaub-Aufsammelgerät nach einem der Ansprüche 2 bis 16, **dadurch gekennzeichnet, dass** die Kehrbürsten (22) mit einem Verhältnis zu der Bürste (9) unterschiedlicher Drehzahl umlaufen.

18. Bodenstaub-Aufsammelgerät nach einem der Ansprüche 1 bis 17, **dadurch gekennzeichnet, dass** die Drehachse (z) einer Kehrbürste (22) in Verfahrrichtung (r) geneigt ist.

19. Bodenstaub-Aufsammelgerät nach einem der Ansprüche 5 bis 18, **dadurch gekennzeichnet, dass** die drei Federn (26) umfangsgleich verteilt sind.

20. Bodenstaub-Aufsammelgerät nach einem der Ansprüche 2 bis 19, **dadurch gekennzeichnet, dass** die Bürste (9) in einem, um eine horizontale Achse (v) beweglichen Bodenteil (30) aufgenommen ist.

21. Bodenstaub-Aufsammelgerät nach Anspruch 20, **dadurch gekennzeichnet, dass** das Bodenteil (30) eine gegenüber dem Bodenteil (30) nach unten vorragende Rampe (32) aufweist.

22. Bodenstaub-Aufsammelgerät nach Anspruch 21, **dadurch gekennzeichnet, dass** die Rampe (32) zu der Bürste (9) hin aus dem Bodenteil (30) auswächst.

23. Bodenstaub-Aufsammelgerät nach einem der Ansprüche 21 oder 22, **dadurch gekennzeichnet, dass** die Rampe (32) relativ zu dem Bodenteil (30) beweglich ist.

24. Bodenstaub-Aufsammelgerät nach einem der Ansprüche 21 bis 23, **dadurch gekennzeichnet, dass** die Rampe (32) relativ zu der Bürste (9) beweglich ist.

25. Bodenstaub-Aufsammelgerät nach einem der Ansprüche 21 bis 24, **dadurch gekennzeichnet, dass** die Rampe (32) in Verfahrrichtung (r) hinter der Bürste (9) angeordnet ist.

26. Bodenstaub-Aufsammelgerät nach einem der Ansprüche 23 bis 25, **dadurch gekennzeichnet, dass** die Rampe (32) um eine Drehachse verschwenkbar ist.

27. Bodenstaub-Aufsammelgerät nach Anspruch 26, **dadurch gekennzeichnet, dass** die Drehachse der Rampe (32) mit einer Bürstenachse (x) zusammenfällt.

28. Bodenstaub-Aufsammelgerät nach einem der Ansprüche 23 bis 27, **dadurch gekennzeichnet, dass** die Rampe (32) gegen Federkraft ausweichbar ist.

29. Bodenstaub-Aufsammelgerät nach Anspruch 28, **dadurch gekennzeichnet, dass** die Feder der Rampe (32) in die Rampenfläche integriert angeordnet ist.

30. Bodenstaub-Aufsammelgerät nach einem der Ansprüche 31 oder 32, **dadurch gekennzeichnet, dass** die Rampe (32) jedenfalls in ihrem federbaren Teil aus einem folienartig dünnen Bandelement (55) gebildet ist.

31. Bodenstaub-Aufsammelgerät nach Anspruch 30, **dadurch gekennzeichnet, dass** das Bandelement (55) eine Kunststofffolie ist.

32. Bodenstaub-Aufsammelgerät nach einem der Ansprüche 6 bis 31, **dadurch gekennzeichnet, dass** die Staubdurchsatzkontrolle (54) aus einer Infrarot-Lichtschranke besteht.

33. Bodenstaub-Aufsammelgerät nach einem der Ansprüche 6 bis 32, **dadurch gekennzeichnet, dass** ein ermittelter hoher Staubdurchsatz im Sinne eines wiederholten Abfahrens der den erhöhten Staubdurchsatz erbracht habenden Fahrtstrecke ausgewertet wird.

34. Bodenstaub-Aufsammelgerät nach einem der Ansprüche 2 bis 33, **dadurch gekennzeichnet, dass** der Motorstrom des die Bürste (9) antreibenden Elektromotors (10) zur Auswertung herangezogen ist und dass in Abhängigkeit des Motorstroms eine Änderung der Verfahrroutine des Bodenstaub-Auf-sammelgeräts (1) erfolgt.

35. Bodenstaub-Aufsammelgerät nach Anspruch 34, **dadurch gekennzeichnet, dass** bei unzulässig erhöhtem Motorstrom ein Zurückfahren des Bodenstaub-Aufsammelgeräts (1) erfolgt.

36. Bodenstaub-Aufsammelgerät nach einem der Ansprüche 34 oder 35, **dadurch gekennzeichnet, dass** beginnend mit einem Schwellwert des erfassten Motorstroms ein Zeitfenster ausgelöst wird, innerhalb dessen eine weitere Erhöhung des Motorstroms als Auslöseereignis für ein Zurückfahren des Bodenstaub-Aufsammelgeräts (1) herangezogen wird.

37. Verfahren zum Betreiben eines selbsttätig verfahrbaren Bodenstaub-Aufsammelgeräts (1) nach den Merkmalen des Oberbegriffs des Anspruches 6 oder nach einem der Ansprüche 6 bis 36, **dadurch gekennzeichnet, dass** ein einer jeweiligen Verfahrstrecke zugeordneter Staubanfall ausgewertet wird und dass in Abhängigkeit von einem vorgegebenen Schwellwert die einem erhöhten Staubanfall zugeordnete Verfahrstrecke noch einmal abgefahren wird.

38. Verfahren nach Anspruch 37, wobei das Bodenstaub-Aufsammelgerät (1) über Stoß- und/oder Abstandssensoren (19) verfügt und das Rückfahrverhalten auf einem vorprogrammierten Ablauf beruht, wobei darüber hinaus die Orientierung anhand eines von einer Basisstation (33) aufgebauten elektromagnetischen Feldes erfolgt, **dadurch gekennzeichnet, dass** zunächst eine Auswertung des elektromagnetischen Feldes durch das Bodenstaub-Auf-sammelgerät (1), etwa durch eine 360°-Drehung des Bodenstaub-Aufsammel-geräts (1) erfolgt und sodann orientiert an den erfassten Minimawerten und ausgerichtet an einem der beiden Minimawerte ein Verfahren über eine vorbestimmte Strecke erfolgt, wonach die vorgenannten Schritte wiederholt werden.

39. Verfahren nach Anspruch 38, **dadurch gekennzeichnet, dass** im Falle einer wiederholten Messung durch eine 360°-Drehung eine größere maximale Feldstärke als bei der vorhergehenden Messroutine ermittelt wird, eine Drehung in Richtung des entgegengesetzten Minimums erfolgt.

40. Verfahren nach einem der Ansprüche 38 oder 39, **dadurch gekennzeichnet, dass** in dem Fall, dass das Gerät (1) auf ein Hindernis trifft, zunächst ein Zurückverfahren erfolgt, daraufhin ein Verschwenken um einen gewählten Winkel oder einen Zufallswinkel in einer bestimmten Drehrichtung, wieder ein Vorwärtsfahren und Wiederholung der vorgenannten Schritte erfolgt, bis kein Hinderniskontakt mehr vorliegt.

41. Verfahren nach Anspruch 40, **dadurch gekennzeichnet, dass** abhängig von einer vorbestimmten Anzahl von Hinderniskontakten nach dem Zurückfahren eine Drehung um einen Zufallswinkel vorgenommen wird.

42. Verfahren nach einem der Ansprüche 40 oder 41, **dadurch gekennzeichnet, dass** abhängig von einer vorbestimmten Anzahl von Hinderniskontakten nach dem Zurückfahren eine Neuorientierung an dem elektromagnetischen Feld vorgenommen wird.

43. Verfahren nach einem der Ansprüche 38 bis 42, **dadurch gekennzeichnet, dass** nach erfolgreichem Umfahren eines Hindernisses eine Rückdrehung um den zum Umfahren des Hindernisses erforderlichen Winkelbetrag durchgeführt wird.

44. Verfahren nach einem der Ansprüche 38 bis 43, **dadurch gekennzeichnet, dass** mit zunehmender Annäherung an die Basisstation (33) die vorgenommene Verfahrstrecke kürzer gesetzt wird.

45. Verfahren nach einem der Ansprüche 38 bis 44, **dadurch gekennzeichnet, dass** jedenfalls im Hinblick auf kleinere Richtungsänderungen auch während des Verfahrens eine Ausrichtung an die Feldstärke vorgenommen wird.

## Claims

1. An automatically displaceable floor dust collection appliance (1) with an electric motor drive, a dust collection vessel (14) and a covering hood (3), the appliance (1) having a basic contour which deviates from a circular shape, the basic contour being composed of a circle-shaped portion (4) and a shaped portion (5) oriented as a rectangle, and the rectangle portion (5) being at the front in the direction of displacement (r), **characterized in that** the appliance (1) also has two sweeping brushes (22) which revolve with an orientation about a vertical axis (y), and **in that** the sweeping brushes (22) are disposed such that they are associated with front corner regions (6) of the rectangle portion (5) of the basic contour.

2. A floor dust collection appliance according to claim 1, **characterized in that** the appliance (1) has a brush (9) which can rotate about a horizontal axis (x), and **in that** the brush (9) is disposed in the rectangle portion (5) of the basic contour.

3. A floor dust collection appliance (1), preferably automatically displaceable floor dust collection appliance (1) with an electric motor drive, a dust collection vessel (14) and a covering hood (3), as well as a brush (9) which, as a result of its rotation, conveys the dust particles in a defined delivery direction into the dust collection vessel (14), according to claim 1, in which a ramp (32) that is disposed oriented to the delivery direction is provided associated with the brush (9), **characterized in that** the ramp (32) is disposed such that it can yield in the delivery direction.

4. An automatically displaceable floor dust collection appliance (1) having an electric motor drive, a dust collection vessel (14) and a covering hood (3), according to claim 1, **characterized in that** the appliance (1) is formed as a sweeping unit with a brush (9) which can rotate about a horizontal axis (x) and is supplied by two sweeping brushes (22) which rotate with an orientation about a vertical axis (y), the sweeping brushes (22) having opposite directions of rotation with respect to one another and transporting into the center of the appliance, in the direction of the brush (9) which rotates about the horizontal axis (x).

5. A floor dust collection appliance according to claim 3, in which the covering hood (3) is supported on the further parts of the appliance by means of eccentrically disposed springs (26), **characterized in that** three springs (26) are provided.

6. A floor dust collection appliance according to claim 3, **characterized by** a brush (9) which rotates about a horizontal axis (x) and throws the collected dust into a dust collection vessel (14) fixed to the appliance, a dust throughput monitor (54) being provided in a dust feed passage (53) leading to the dust collection vessel (14).

7. A floor dust collection appliance according to one of claims 2 to 6, **characterized in that** the brush (9) is mounted adjustably in terms of height on a rocker (51).

8. A floor dust collection appliance according to claim 7, **characterized in that** the sweeping brushes (22) are also disposed adjustably in terms of height on the rocker (51).

9. A floor dust collection appliance according to claim 7 or 8, **characterized in that** the axis (u) of the electric motor (10) which drives the brush (9) is disposed horizontally and coincides with an axis of rotation (w) of the rocker (51).

10. A floor dust collection appliance according to claim 3 or according to one of claims 1 to 9, **characterized in that** an infrared light barrier is used to detect sudden drops and/or obstacles.

11. A floor dust collection appliance according to claim 3 or according to one of claims 1 to 10, having a chassis (59) which distances the floor dust collection appliance (1) together with the covering hood (3) from the floor (41), the covering hood (3) resting on the floor (41) when a predetermined load is reached, **characterized in that** the chassis (59) is spring-mounted relative to the covering hood (3), in such a manner that the spring responds so as to reduce the spacing between the covering hood (3) and the floor (41) when a threshold value is exceeded.

12. A floor dust collection appliance according to claim 11, **characterized in that** when the threshold value is reached, the covering hood (3) comes to rest on the floor (41) as a result of the immediate yielding of the spring.

13. A floor dust collection appliance according to one of claims 1 to 12, **characterized in that** brush portions of the sweeping brushes (22) project beyond an edge contour of the appliance (1) which is determined by the covering hood (3).

14. A floor dust collection appliance according to one of claims 1 to 13, **characterized in that** the brush (9) throws the floor dust into a dust collection vessel (14) fixed to the appliance.

15. A floor dust collection appliance according to one of claims 2 to 14, **characterized in that** the brush (9) and the sweeping brushes (22) are driven jointly by means of an electric motor (10).

16. A floor dust collection appliance according to claim 15, **characterized in that** the electric motor (10) drives the brush (9), and **in that** the sweeping brushes (22) are driven by means of transmission belts (25) driven by the brush (9).

17. A floor dust collection appliance according to one of claims 2 to 16, **characterized in that** the sweeping brushes (22) revolve at a different rotational speed from the brush (9).

18. A floor dust collection appliance according to one of claims 1 to 17, **characterized in that** the axis of rotation (z) of a sweeping brush (22) is inclined in the direction of displacement (r).

19. A floor dust collection appliance according to one of claims 5 to 18, **characterized in that** the three springs (26) are distributed evenly over the periphery.

20. A floor dust collection appliance according to one of claims 2 to 19, **characterized in that** the brush (9) is accommodated in a base part (30) which can move about a horizontal axis (v).

21. A floor dust collection appliance according to claim 20, **characterized in that** the base part (30) has a ramp (32) which projects downwards with respect to the base part (30).

22. A floor dust collection appliance according to claim 21, **characterized in that** the ramp (32) protrudes out of the base part (30) towards the brush (9).

23. A floor dust collection appliance according to claim 21 or 22, **characterized in that** the ramp (32) is moveable relative to the base part (30).

24. A floor dust collection appliance according to one of claims 21 to 23, **characterized in that** the ramp (32) is moveable relative to the brush (9).

25. A floor dust collection appliance according to one of claims 21 to 24, **characterized in that** the ramp (32) is arranged behind the brush (9), as seen in the direction of displacement (r).

26. A floor dust collection appliance according to one of claims 23 to 25, **characterized in that** the ramp (32) is pivotable about an axis of rotation.

27. A floor dust collection appliance according to claim 26, **characterized in that** the axis of rotation of the ramp (32) coincides with a brush axis (x).

28. A floor dust collection appliance according to one of claims 23 to 27, **characterized in that** the ramp (32) can yield against spring force.

29. A floor dust collection appliance according to claim 28, **characterized in that** the spring of the ramp (32) is disposed integrated in the ramp surface.

30. A floor dust collection appliance according to claim 31 or 32, **characterized in that** the ramp (32), at least in its sprung part, is formed from a thin strip element (55) in film/foil form.

31. A floor dust collection appliance according to claim 30, **characterized in that** the strip element (55) is a plastics film.

32. A floor dust collection appliance according to one of claims 6 to 31, **characterized in that** the dust throughput monitor (54) comprises an infrared light barrier.

33. A floor dust collection appliance according to one of claims 6 to 32, **characterized in that** a determined high throughout of dust is assessed in the context of whether to move again over the path which caused the high throughput of dust.

34. A floor dust collection appliance according to one of claims 2 to 33, **characterized in that** the current of the electric motor (10) which drives the brush (9) is used for assessment, and **in that** a change in the displacement routine of the floor dust collection appliance (1) is effected as a function of the motor current.

35. A floor dust collection appliance according to claim 34, **characterized in that** if the motor current is unacceptably high, the floor dust collection appliance (1) is moved back.

36. A floor dust collection appliance according to claim 34 or 35, **characterized in that** starting with a threshold value of the recorded motor current, a time window is triggered, within which window a further increase in the motor current is used as a trigger event for moving the floor dust collection appliance (1) back.

37. A method for operating an automatically displaceable floor dust collection appliance (1) according to the features of the preamble of claim 6 or according to one of claims 6 to 36, **characterized in that** a dust yield associated with a particular displacement path is assessed, and **in that** the displacement path associated with a high dust yield is covered again as a function of a predetermined threshold value.

38. A method according to claim 37, in which the floor dust collection appliance (1) has impact and/or proximity sensors (19), and the moving-back behavior is based on a pre-programmed sequence, the orientation furthermore being based on an electromagnetic field built up by a base station (33), **characterized in that** first of all the electromagnetic field is assessed by the floor dust collection appliance (1), for example by a 360° rotation of the floor dust collection appliance (1), and then a displacement over a predetermined path is effected oriented as a function of the recorded minimum values and directed at one of the two minimum values, after which the abovementioned steps are repeated.

39. A method according to claim 38, **characterized in that** in the event of a repeated measurement by a 360° rotation determining a higher maximum field strength than in the preceding measurement routine, a rotation is carried out in the direction of the opposite minimum.

40. A method according to claim 38 or 39, **characterized in that** if the appliance (1) meets an obstacle, first of all it is displaced back, followed by pivoting through a selected angle or a random angle in a defined direction of rotation, then a further forwards movement and repetition of the above steps until contact is no longer made with the obstacle.

41. A method according to claim 40, **characterized in that** after the appliance has been moved back, a rotation through a random angle is carried out as a function of a predetermined number of contacts with an obstacle.

42. A method according to claim 40 or 41, **characterized in that** after the appliance has been moved back, a reorientation at the electromagnetic field is carried out as a function of a predetermined number of contacts with an obstacle.

43. A method according to one of claims 38 to 42, **characterized in that** after an obstacle has been successfully navigated around, the appliance is rotated back through the angle which was required to navigate around the obstacle.

44. A method according to one of claims 38 to 43, **characterized in that** the displacement path carried out is set to be shorter with increasing proximity to the base station (33).

45. A method according to one of claims 38 to 44, **characterized in that** an orientation to the field strength is also carried out during the displacement at least with respect to relatively minor changes in direction.

## Revendications

1. Appareil collecteur de poussière sur les sols (1), déplaçable automatiquement, comprenant un entraînement par moteur électrique, un récipient de collecte de poussière (14) et un capot de couverture (3), l'appareil (1) présentant un profil différent d'une forme circulaire, le profil se composant d'un tronçon à forme circulaire (4) et d'un tronçon de forme (5) orienté vers une forme rectangulaire, et le tronçon rectangulaire (5) étant placé à l'avant dans la direction de déplacement (r), **caractérisé en ce que** l'appareil (1) présente en outre deux brosses à détritus (22) tournant, selon une certaine orientation, sur un axe (y) vertical, et **en ce que** les brosses à détritus (22) sont disposées de façon associée à des zones d'angle avant (6) du tronçon rectangulaire (5) du profil.

2. Appareil collecteur de poussière sur les sols selon la revendication 1, **caractérisé en ce que** l'appareil (1) présente une brosse (9) susceptible de tourner autour d'un axe horizontal (x), et **en ce que** la brosse (9) est disposée dans le tronçon rectangulaire (5) du profil.

3. Appareil collecteur de poussière sur les sols (1), de préférence appareil collecteur de poussière sur les sols (1) déplaçable automatiquement, comprenant un entraînement par moteur électrique, un récipient de collecte de poussière (14) et un capot de couverture (3), ainsi qu'une brosse (9), qui, du fait de sa rotation, transporte les particules de poussière en une direction d'éjection déterminée dans le récipient de collecte de poussière (14), selon la revendication 1, dans lequel, associée à la brosse (9), est prévue une rampe (32) disposée de façon orientée sur la direction d'éjection, **caractérisé en ce que** la rampe (32) est disposée de façon à pouvoir s'échapper dans la direction d'éjection.

4. Appareil collecteur de poussière sur les sols (1), déplaçable automatiquement, comprenant un entraînement par moteur électrique, un récipient de collecte de poussière (14) et un capot de couverture (3), selon la revendication 1, **caractérisé en ce que** l'appareil (1) est réalisé sous la forme d'unité à détritus, comprenant une brosse (9) susceptible de tourner autour d'un axe horizontal (x) et alimentée par deux brosses à détritus (22) tournant de façon orientée sur l'axe vertical (y), les brosses à détritus (22) ayant des sens de rotation mutuellement opposés et transportant au centre de l'appareil, en direction de la brosse (9) tournant autour de l'axe horizontal (x).

5. Appareil collecteur de poussière sur les sols selon la revendication 3, dans lequel le capot de couverture (3) est soutenu sur les autres parties d'appareil, au moyen de ressorts (26) disposés de façon décentrée, **caractérisé en ce que** le nombre de ressorts (26) prévu est de trois.

6. Appareil collecteur de poussière sur les sols selon la revendication 3, **caractérisé par** une brosse (9), tournant autour d'un axe horizontal (x), qui projette la poussière accumulée dans un récipient collecteur de poussière (14) fixé à l'appareil, un contrôle de débit de poussière (54) étant prévu dans un canal d'amenée de poussière (53) menant au récipient de collecte de poussière (14).

7. Appareil collecteur de poussière sur les sols selon l'une des revendications 2 à 6, **caractérisé en ce que** la brosse (9) est montée de façon à être réglable en hauteur sur un fléau (51).

8. Appareil collecteur de poussière sur les sols selon la revendication 7, **caractérisé en ce que**, également, les brosses à détritus (22) sont disposées de façon réglable en hauteur sur le fléau (51).

9. Appareil collecteur de poussière sur les sols selon l'une des revendications 7 ou 8, **caractérisé en ce que** l'axe (u) du moteur électrique (10) entraînant la brosse (9) est disposé horizontalement et coïncide avec un axe de rotation (w) du fléau (51).

10. Appareil collecteur de poussière sur les sols selon la revendication 3 ou selon l'une des revendications 1 à 9, **caractérisé en ce qu'**une barrière photoélectrique à infrarouge est utilisée pour l'identification d'un trou et/ou d'un obstacle.

11. Appareil collecteur de poussière sur les sols selon la revendication 3 ou selon l'une des revendications 1 à 10, comprenant un train de roulement (59), maintenant une certaine garde vis-à-vis du sol (41) à l'appareil collecteur de poussière sur les sols (1), conjointement avec le capot de couverture (3), dans lequel le capot de couverture (3), à l'atteinte d'une sollicitation prédéterminée, se pose au sol (41), **caractérisé en ce que** le train de roulement (59) est suspendu élastiquement par rapport au capot de couverture (3), de manière que, le ressort, en cas de dépassement d'une valeur seuil, réagisse dans le sens d'une limitation de la garde entre le capot de couverture (3) et le sol (41).

12. Appareil collecteur de poussière sur les sols selon la revendication 11, **caractérisé en ce que**, à l'atteinte de la valeur de seuil, le capot de couverture (3) vient se poser sur le sol (41), par suite de la déformation immédiate du ressort.

13. Appareil collecteur de poussière sur les sols selon l'une des revendications 1 à 12, **caractérisé en ce que** des tronçons des brosses à détritus (22) ressortent d'un contour de bordure, prédéterminé par le capot de couverture (3), de l'appareil (1).

14. Appareil collecteur de poussière sur les sols selon l'une des revendications 1 à 13, **caractérisé en ce que** la brosse (9) projette la poussière du sol dans un récipient collecteur de poussière (14) fixé à l'appareil.

15. Appareil collecteur de poussière sur les sols selon l'une des revendications 2 à 14, **caractérisé en ce que** la brosse (9) et les brosses à détritus (22) sont entraînées conjointement, au moyen d'un moteur électrique (10).

16. Appareil collecteur de poussière sur les sols selon la revendication 15, **caractérisé en ce que** le moteur électrique (10) entraîne la brosse (9), et **en ce que** les brosses à détritus (22) sont entraînées au moyen de courroies de transmission (25), entraînées par la brosse (9).

17. Appareil collecteur de poussière sur les sols selon l'une des revendications 2 à 16, **caractérisé en ce que** les brosses à détritus (22) tournent selon un certain rapport vis à vis de la vitesse de rotation, différente, de la brosse.

18. Appareil collecteur de poussière sur les sols selon l'une des revendications 1 à 17, **caractérisé en ce que** l'axe de rotation (z) d'une brosse à détritus (22) est incliné dans la direction de déplacement (r).

19. Appareil collecteur de poussière sur les sols selon l'une des revendications 5 à 18, **caractérisé en ce que** les trois ressorts (26) sont répartis de façon également espacée en périphérie.

20. Appareil collecteur de poussière sur les sols selon l'une des revendications 2 à 19, **caractérisé en ce que** la brosse (9) est logée dans une partie de fond (30), mobile autour d'un axe horizontal (v).

21. Appareil collecteur de poussière sur les sols selon la revendication 20, **caractérisé en ce que** la partie de fond (30) présente une rampe (32) en saillie vers le bas par rapport à la partie de fond (30).

22. Appareil collecteur de poussière sur les sols selon la revendication 21, **caractérisé en ce que** la rampe (32) sort de la partie de fond (30) vers la brosse (9).

23. Appareil collecteur de poussière sur les sols selon l'une des revendications 21 ou 22, **caractérisé en ce que** la rampe (32) est mobile par rapport à la partie de fond (30).

24. Appareil collecteur de poussière sur les sols selon l'une des revendications 21 à 23, **caractérisé en ce que** la rampe (32) est mobile par rapport à la brosse (9).

25. Appareil collecteur de poussière sur les sols selon l'une des revendications 21 à 24, **caractérisé en ce que** la rampe (32) est disposée à l'arrière de la brosse (9), en observant dans la direction de déplacement (r).

26. Appareil collecteur de poussière sur les sols selon l'une des revendications 23 à 25, **caractérisé en ce que** la rampe (32) est pivotante autour d'un axe de rotation.

27. Appareil collecteur de poussière sur les sols selon la revendication 26, **caractérisé en ce que** l'axe de rotation de la rampe (32) coïncide avec un axe de brosse (x).

28. Appareil collecteur de poussière sur les sols selon l'une des revendications 23 à 27, **caractérisé en ce que** la rampe (32) est susceptible de s'échapper à l'encontre d'une force élastique.

29. Appareil collecteur de poussière sur les sols selon la revendication 28, **caractérisé en ce que** le ressort de la rampe (32) est intégré dans la surface de rampe.

30. Appareil collecteur de poussière sur les sols selon l'une des revendications 31 ou 32, **caractérisé en ce que** la rampe (32) est formée, en tout cas dans sa partie à capacité élastique, d'un élément en bande ou ruban (55) mince, du genre d'une feuille.

31. Appareil collecteur de poussière sur les sols selon la revendication 30, **caractérisé en ce que** l'élément de bande ou ruban (55) est une feuille de matière synthétique.

32. Appareil collecteur de poussière sur les sols selon l'une des revendications 6 à 31, **caractérisé en ce que** le contrôle de débit de poussière (54) est formé d'une barrière photoélectrique à infrarouge.

33. Appareil collecteur de poussière sur les sols selon l'une des revendications 6 à 32, **caractérisé en ce qu'**un débit en poussière élevé, ayant été déterminé, est évalué dans le sens d'un accomplissement, répété, de la trajectoire de déplacement ayant produit le débit en poussière élevé.

34. Appareil collecteur de poussière sur les sols selon l'une des revendications 2 à 33, **caractérisé en ce que** le courant moteur du moteur électrique (10) entraînant la brosse (9) est utilisé pour l'évaluation et une modification du programme de déplacement de l'appareil collecteur de poussière sur les sols (1) est effectuée en fonction du courant moteur.

35. Appareil collecteur de poussière sur les sols selon la revendication 34, **caractérisé en ce qu'**un trajet de retour de l'appareil collecteur de poussière sur les sols (1) est effectué dans le cas où le courant moteur présente une valeur élevée, inadmissible.

36. Appareil collecteur de poussière sur les sols selon l'une des revendications 34 ou 35, **caractérisé en ce que**, en commençant par une valeur de seuil du courant moteur ayant été détecté, on définit, avec une certaine résolution, une fenêtre temporelle, à l'intérieur de laquelle une augmentation supplémentaire du courant moteur est utilisée en tant qu'évènement de déclenchement, pour effectuer un trajet de retour de l'appareil collecteur de poussière sur les sols (1).

37. Procédé de fonctionnement d'un appareil collecteur de poussière sur les sols (1) déplaçable automatiquement, selon les caractéristiques du préambule de la revendication 6 ou selon l'une des revendications 6 à 36, **caractérisé en ce qu'**une apparition de poussière associée à un itinéraire de déplacement spécifique est évaluée, et **en ce que** l'itinéraire de déplacement, associé à une apparition de poussière augmentée, est parcouru encore une fois en fonction d'une valeur de seuil prédéterminée.

38. Procédé selon la revendication 37, l'appareil collecteur de poussière sur les sols (1) disposant de capteurs d'impacts et/ou d'espacement (19) et le comportement sur itinéraire de retour reposant sur un déroulement préprogrammé, dans lequel de plus l'orientation est effectuée à l'aide d'un champ électromagnétique établi depuis une station de base (33), **caractérisé en ce que**, d'abord, est effectuée une évaluation du champ électromagnétique au moyen de l'appareil collecteur de poussière pour les sols (1), par exemple en procédant à une orientation à 360° de l'appareil collecteur de poussière pour les sols (1), puis, en s'orientant sur les valeurs minimales détectées et en se calant sur l'une des deux valeurs minimales, on effectue un déplacement sur un itinéraire prédéterminé, suite à quoi les étapes précitées sont répétées.

39. Procédé selon la revendication 38, **caractérisé en ce que**, en cas d'une mesure répétée, opérée au moyen d'une rotation à 360°, on détermine une intensité de champ maximale plus élevée que pour le programme de mesure précédent, puis on effectue une rotation dans le sens du minimum opposé.

40. Procédé selon la revendication 38 ou 39, **caractérisé en ce que**, dans le cas où l'appareil (1) rencontre un obstacle, il se produit tout d'abord un déplacement en arrière, suivi d'une rotation d'un angle prédéterminé ou d'un angle aléatoire selon une certaine direction de rotation, elle-même suivie d'un déplacement en avant avec répétition des étapes précédentes, jusqu'au moment où aucun obstacle n'est plus présent.

41. Procédé selon la revendication 40, **caractérisé en ce que**, en fonction d'un certain nombre prédéterminé de contacts d'obstacle après un déplacement en arrière, une rotation d'un angle aléatoire est effectuée.

42. Procédé selon la revendication 40 ou 41, **caractérisé en ce que**, en fonction d'un certain nombre prédéterminé de contacts d'obstacle après un déplacement en arrière, une nouvelle orientation sur le champ électromagnétique est effectuée.

43. Procédé selon l'une des revendications 38 à 42, **caractérisé en ce que**, après le contournement avec succès d'un obstacle, une rotation dans le sens opposé d'un angle égal à celui nécessaire pour contourner l'obstacle est effectuée.

44. Procédé selon l'une des revendications 38 à 43, **caractérisé en ce que**, à mesure que l'on approche de la station de base (33), le chemin de parcours est réglé pour être réduit.

45. Procédé selon l'une des revendications 38 à 44, **caractérisé en ce que**, en ce qui concerne des faibles changements de direction, un alignement par rapport à l'intensité du champ est également effectué pendant le procédé.
